# EUROPÄISCHE PATENTSCHRIFT

(11) **EP 2 813 448 B1**
(45) Veröffentlichungstag und Bekanntmachung des Hinweises auf die Patenterteilung: **06.01.2016**
(21) Anmeldenummer: 14168291.4
(22) Anmeldetag: 14.05.2014
(51) Int. Cl.: B65G 57/00

(54) **Verfahren und Vorrichtung zum Umgang mit Zwischenlagen**
Method and device for handling intermediate layers
Procédé et dispositif de manutention de couches intermédiaires

(30) Priorität: 10.06.2013 DE 102013106012
(43) Veröffentlichungstag der Anmeldung: 17.12.2014
(73) Patentinhaber: Krones Aktiengesellschaft, 93073 Neutraubling (DE)
(72) Erfinder: Graf, Peter, 93073 Neutraubling (DE); Osterhammer, Martin, 93073 Neutraubling (DE); Schweighofer, Georg, 93073 Neutraubling (DE); Osterhammer, Florian, 93073 Neutraubling (DE); Beer, Erhard, 93073 Neutraubling (DE); Fritsch, Dennis, 93073 Neutraubling (DE); Semmelrock, Albin, 93073 Neutraubling (DE)
(74) Vertreter: Benninger, Johannes

(56) Entgegenhaltungen:
- EP-A1- 0 560 112
- EP-A1- 2 772 444
- DE-A1- 3 702 965
- DE-U1- 29 520 244

## Beschreibung

Die vorliegende Erfindung betrifft ein Verfahren zum Umgang mit Zwischenlagen gemäß dem Oberbegriff des Anspruchs 1 und eine Vorrichtung zur Durchführung eines solchen Verfahrens gemäß dem Oberbegriff des Anspruchs 13.

Beim Umgang mit Artikeln, beispielsweise bei deren Aufstapeln zu einem Stapel, kann es vorteilhaft sein, so genannte Zwischenlagen zwischen Lagen aus einem oder mehreren, beispielsweise in einem Stapel übereinander angeordneten Artikeln einzubringen. Dieses Einbringen erfolgt vorzugsweise beispielsweise während des Aufstapelns der Artikel zu einem aus mehreren, jeweils durch eine Lage von einem oder mehreren Artikeln gebildeten Stapellagen bestehenden Stapel, wobei bevor eine neue Lage aus einem oder mehreren Artikeln als neue Stapellage zuoberst auf einen bis dato errichteten Stapel aufgelegt wird, zunächst eine Zwischenlage auf die zuletzt auf den Stapel aufgelegte Stapellage aufgelegt wird.

Bei den Artikeln kann es sich beispielsweise um Objekte, wie etwa verpackte oder unverpackte Gegenstände, Behälter, Kartonagen, oder um Gebinde aus mehreren Objekten handeln, wobei die Objekte eines Gebindes beispielsweise vermittels einer Umreifung, einer Umverpackung, wie etwa einer Umwickelung, einem Schrumpfschlauch oder eines Kartons oder eines Tragegestells zusammengehalten werden, um nur einige denkbare Ausgestaltungen zu nennen.

Als Zwischenlagen kommen beispielsweise Platten aus Papier, Pappe, Karton, Kunststoff sowie gegebenenfalls Folien aus nur einer einzigen Lage des verwendeten Materials bestehende und deshalb auch als massive oder als solide bezeichnete Zwischenlagen zum Einsatz, sowie paketierte Zwischenlagen, bei denen mehrere Platten aus Papier, Pappe, Karton, Kunststoff und/oder Folien an ihren Stirnseiten miteinander verklebt sind, als auch laminierte Zwischenlagen, bei denen mehrere Platten aus Papier, Pappe, Karton, Kunststoff und/oder Folien vollständig untereinander verleimt sind, als auch Kombinationen hieraus sowohl in homogener Ausführung, als auch in Sandwichausführung beispielsweise mit eingeschlossenen Lufträumen.

Die Zwischenlagen werden auf einem Zwischenlagenstapel, in dem sie übereinander liegen, bereitgehalten. Um eine Zwischenlage nach der anderen zwischen Stapellagen eines aufzustapelnden Stapels einzubringen, werden die Zwischenlagen zunächst vereinzelt, beispielsweise indem die Zwischenlagen zu deren Separierung einzeln nacheinander vom Zwischenlagenstapel abgenommen werden. Die durch das Abnehmen erfolgende Zwischenlagenseparierung kann dabei von der Oberseite oder von der Unterseite des Zwischenlagenstapels her erfolgen. Anschließend werden die Zwischenlagen eine nach der anderen zum Stapelplatz verbracht und während des Aufstapelns zwischen aufeinander folgende Stapellagen des Stapels in den Stapel eingebracht.

Einen wesentlichen Kostenfaktor beim Umgang mit Artikeln, beispielsweise in der Verpackungstechnik und in der Verpackungsindustrie, stellt die Taktung, mit der innerhalb möglichst kurzer Zeit mit möglichst vielen Artikeln umgegangen werden kann, dar. Je höher die Taktung, desto höher ist dabei der Artikelumsatz und um so höher und damit besser ist die Auslastung der hierfür vorgesehenen Maschinen, Anlagen und Einrichtungen. Die Taktung kann somit als Quotient der Anzahl von Artikeln zur Zeit, innerhalb der mit dieser Anzahl von Artikeln umgegangen wird, beschrieben werden.

Beim Einbringen von Zwischenlagen zwischen die Stapellagen eines Stapels ist die Taktung dadurch begrenzt, wie schnell eine von einem Zwischenlagenstapel durch Vereinzelung separierte Zwischenlage an einen Stapelplatz verbracht und dort auf die durch die zuletzt aufgelegte Lage von einem oder mehreren Artikeln gebildete oberste Stapellage eines bis dato am Stapelplatz errichteten Stapels abgelegt werden kann.

Wie schnell dies geschehen kann ist dabei nicht nur abhängig von der erzielbaren Geschwindigkeit einer die nach deren Vereinzelung vom Zwischenlagenstapel separierten Zwischenlagen von einer Übernahmeposition zu einer Ablegeposition verbringenden Verbringungsvorrichtung, sondern auch vom Verbringungsweg, den die Verbringungsvorrichtung dabei zurücklegt und den hierzu erforderlichen Bewegungen. Der Verbringungsweg gibt hierbei die Bewegungen vor, die nötig sind, um von der Übernahmeposition, bei der die Verbringungsvorrichtung entweder eine durch eine Vereinzelung zuvor vom Zwischenlagenstapel separierte Zwischenlage, oder eine vom Zwischenlagenstapel zu separierende Zwischenlage unter gleichzeitiger Vereinzelung von im Zwischenlagenstapel aufeinanderliegender Zwischenlagen erfasst, zur Ablegeposition zu gelangen, bei der die Verbringungsvorrichtung die zuvor erfasste Zwischenlage wieder frei gibt und zuoberst auf die oberste Stapellage eines bis dato am Stapelplatz aufgestapelten Stapels auflegt.

Durch DE 37 02 965 A1 ist eine Beladestation mit einem Rollladen bekannt. Die Beladestation befindet sich ständig oberhalb eines Stapelplatzes, an dem Stapel aus mehreren durch Zwischenlagen getrennten Stapellagen aufgestapelt werden. Mit der Beladestation verbunden ist eine Hubvorrichtung. Die Hubvorrichtung senkt die Beladestation von einem Beladeniveau, auf welchem Artikel in die Beladestation eingebracht werden, auf ein mit zunehmender Anzahl von in einen zu errichtenden Stapel bis dato eingebrachten Stapellagen veränderliches Entladeniveau ab und hebt nach der Ablage einer Lage von Artikeln auf einen am Stapelplatz zu errichtenden Stapel die Beladestation zur erneuten Einbringung von Artikeln wieder auf das Beladeniveau an. Mit der Hubvorrichtung ist außerdem ein Zwischenlagenmagazin verbunden, welches einen Zwischenlagenstapel aus mehreren, übereinander liegenden, gleich ausgerichteten Zwischenlagen bereithält. Das Zwischenlagenmagazin wird vermittels der Hubvorrichtung gemeinsam mit der Beladestation abgesenkt und wieder angehoben. Befindet sich die Beladestation auf Beladeniveau werden von einer Zuführeinrichtung der Reihe nach angelieferte Artikel mittels eines Schiebers auf den Rollladen geschoben, bis sich dort die einer als Stapellage zuoberst auf einen an einem Stapelplatz aufzustapelnden Stapel einzubringenden Lage von Artikeln entsprechende gewünschte Anzahl von Artikeln angesammelt hat. Dadurch wird auf dem Rollladen nach und nach eine Lage von Artikeln bereitgestellt. Ist eine Lage von Artikeln fertiggestellt, senkt die mit der Beladestation verbundene Hubvorrichtung die Beladestation auf ein Entladeniveau entsprechend einem Niveau der als nächstes auf den aufzustapelnden Stapel aufzulegenden Stapellage ab, welche durch die in der Beladevorrichtung befindliche, fertige Lage von Artikeln gebildet werden soll. Dann wird der Rollladen zurückgezogen, wobei er unter der Lage von Artikeln weggezogen wird. Dadurch gelangt die Lage von Artikeln als oberste Stapellage auf einen an einem unter dem Rollladen befindlichen Stapelplatz aufzustapelnden Stapel. Anschließend hebt die Hubvorrichtung die Beladestation wieder auf das Beladeniveau, auf welchem die Artikel für eine neue Lage von Artikeln wieder nach und nach auf den Rollladen geschoben werden können. Bevor der Rollladen wieder seine vorherige Beladestellung einnimmt, wird eine zuoberst auf dem Zwischenlagenstapel aufliegende Zwischenlage wenigstens im Bereich ihrer Vorderkante vermittels heb- und senkbaren Saugglocken, die an einem gemeinsamen, horizontal und vertikal verschiebbaren Schlitten angeordnet sind, von dem Zwischenlagenstapel erfasst, zumindest im Bereich ihrer Vorderkante vertikal angehoben und in der Offenstellung des Rollladens in ein an der Unterseite des Rollladens angeordnetes, mit diesem horizontal bewegliches Mitnehmerzangenpaar horizontal eingeschoben. Das Mitnehmerzangenpaar ist hierbei geöffnet. Bevor der Rollladen wieder in die Beladestellung fährt, wird das Mitnehmerzangenpaar geschlossen, wodurch die vom Zwischenlagenstapel separierte Zwischenlage an ihrer Vorderkante gegriffen wird und der Rollladen bei seiner Bewegung aus der Offenstellung in die Beladestellung die Zwischenlage über die oberste Stapellage des bis dato am Stapelplatz aufgestapelten Stapels mitzieht. In der Beladestellung angekommen wird das Mitnehmerzangenpaar geöffnet und die Zwischenlage auf der obersten Stapellage des bis dato am Stapelplatz aufgestapelten Stapels abgelegt. Nachdem dann eine neue Lage von Artikeln auf den Rollladen aufgeschoben und entsprechend der Anordnung in der Stapellage gruppiert worden ist, fährt der Rollladen wieder in seine Offenstellung zurück, wodurch die neue Lage von Artikeln auf der vorhergehenden, inzwischen mit einer Zwischenlage bedeckten und zuoberst am Stapelplatz aufgestapelten Stapellage abgesetzt wird.

Nachteilig hieran ist der die erzielbare Taktung gravierend herabsenkende Zeitverlust, welcher mit der Bereitstellung und Gruppierung der Artikel auf dem Rollladen einhergeht, bevor die nach der Gruppierung fertiggestellte Lage von Artikeln als oberste Stapellage auf den bis dato am Stapelplatz aufgestapelten Stapel abgelegt werden kann. Durch das mit der Hubvorrichtung verbundene, vertikal verfahrende Zwischenlagenmagazin ist außerdem die Planungsfreiheit bei der Entwicklung einer Anlage zum Umgang mit Artikeln, an deren Ende ein Stapel aus mehreren, durch Lagen von Artikeln gebildeten Stapellagen, von denen wenigstens zwei durch eine Zwischenlage voneinander getrennt sein sollen, sehr stark eingeschränkt. Ein weiterer Nachteil ergibt sich durch den Zeitverlust, der bei dieser Beladestation entsteht, soll eine Zwischenlage als Bodenlage zuunterst im Stapel liegen und/oder als Decklage zuoberst den Stapel abschließen. Für die Beladestation bedeutet die Einbringung solcher Boden- und/oder Decklagen jeweils eine Leerfahrt, bei welcher der Rollladen zeitraubend geöffnet und geschlossen werden muss, während keine neue Lage von Artikeln gebildet werden kann. Durch das hohe Gewicht, welches vermittels der Hubvorrichtung aufgrund des mit dieser verbundenen Zwischenlagenmagazins ständig bewegt werden muss, sind darüber hinaus die bei den Verfahrwegen erzielbaren Beschleunigungen ebenso wie die hierdurch erzielbare Taktung gering und der Verschleiß sehr hoch. Ein zusätzlicher Nachteil ergibt sich durch die Wartezeiten bei der Zwischenlagenseparierung, da diese nur nach und nach vorgenommen werden kann, erst wenn eine Lage von Artikeln fertiggestellt und am Stapelplatz abgelegt wurde. Hierdurch ergibt sich eine zusätzliche, die erzielbare Taktung nochmals herabsenkende Verlängerung des zeitlichen Ablaufs beim Aufstapeln eines Stapels.

Darüber hinaus hat es sich als die Taktung vorteilhaft beeinflussend herausgestellt, die Bildung und Bereitstellung von Lagen von Artikeln, welche als Stapellagen in einen an einem Stapelplatz zu errichtenden Stapel eingebracht werden sollen, sowie deren Überführung von einem beispielsweise eine Bereitstellungsfläche umfassenden Bereitstellungsplatz zum Stapelplatz von der Verbringung von Zwischenlagen vom Zwischenlagenstapel zum Stapelplatz zu trennen.

Eine weitaus gängigere Methode, Zwischenlagen zu vereinzeln und/oder vom Zwischenlagenstapel separierte Zwischenlagen zu verbringen, ist deshalb, die Zwischenlagen jeweils mittels von oben kommender, unterdruckbeaufschlagter Saugglocken aufzunehmen und während ihrer Verbringung zu halten. Dabei werden die Zwischenlagen an mehreren über ihre gesamte Oberfläche verteilten Stellen von den Saugglocken angesaugt.

Durch US 2003/0012636 A1 ist bekannt, kurz als Platten bezeichnete plattenförmige Gegenstände von einem Stapel aus mehreren Platten vereinzelt abzunehmen und dadurch zu vereinzeln, indem eine Hebevorrichtung mit mehreren Saugglocken auf die Oberseite des Stapels abgesenkt und wieder angehoben wird, wodurch die oberste Platte angesaugt und vom Stapel abgehoben wird. Nach dem Anheben wird die vom Stapel separierte Platte einer Verbringungsvorrichtung übergeben. Diese besteht aus einem um eine horizontale Achse rotierend angetriebenen Zylinder, an dessen Umfang gleichmäßig verteilt ebenfalls Gruppen von Saugglocken angeordnet sind. Der Zylinder ist gleichzeitig Umlenk- und/oder Antriebsrolle einer Fördereinrichtung. Die vom Stapel separierte Platte wird zu deren Übergabe an die Verbringungsvorrichtung von der Hebevorrichtung tangential an den Umfang des Zylinders herangeführt. Passiert eine Gruppe von Saugglocken des angetriebenen Zylinders die von der Hebevorrichtung angesaugte Platte, wird die Platte von den Saugglocken der Hebevorrichtung an die Saugglocken der entsprechenden Gruppe übergeben, so dass die Platte von der Hebevorrichtung freigegeben und nunmehr entsprechend der Umfangsbewegung des Zylinders weitertransportiert wird. Dabei wird eine vermittels der Hebevorrichtung zuvor von unten an den Zylinder herangeführte Platte nach oben auf den Zylinder hinauf geführt, wo sie sich dann von der Gruppe von Saugglocken am Umfang des Zylinders löst und vermittels der Fördereinrichtung auf dieser aufliegend zur Weiterverwendung abtransportiert wird.

Nachteilig hieran ist, dass die Verbringung zunächst nur in horizontaler Richtung und/oder nach oben weg von der Oberseite des Stapels erfolgen darf, damit es zu keinen Kollisionen zwischen der Hebevorrichtung und/oder der Verbringungsvorrichtung mit dem Stapel kommt. Dadurch müssen lange Verbringungswege einhergehend mit einer Vielzahl zu deren Zurücklegung notwendiger unterschiedlicher Bewegungen nebst Richtungswechseln für die Verbringung eingeplant und eingehalten werden, insbesondere dann, wenn sich die Ablegeposition, zu welcher eine Platte nach deren Vereinzelung von der Verbringungsvorrichtung verbracht wird, beispielsweise unterhalb des Niveaus der Oberseite des Stapels und damit unterhalb der Übernahmeposition befindet, bei welcher die Verbringungsvorrichtung die nach der Vereinzelung vom Stapel separierte Platte übernimmt. Dies hat eine stark eingeschränkte, erzielbare Taktung zur Folge.

Durch DE 295 20 244 U1 ist bekannt, einen Stapel an einem Stapelplatz aufzustapeln, indem auf immer gleich bleibendem Niveau Stapellage um Stapellage auf einen aus zwei gegenläufig beweglich angeordneten Platten gebildeten Tragboden geschoben werden, der durch entgegengesetztes Wegziehen seiner beweglich angeordneten Platten geöffnet wird, wodurch die Stapellage zuoberst auf den bis dato errichteten Stapel abgelegt wird. Mit zunehmender Höhe des bis dato errichteten Stapels wird dieser weiter und weiter abgesenkt, um das Niveau des Tragbodens gleichbleibend halten zu können. Zwischenlagen werden von einer Endlosrolle abgeschnitten vermittels Ansaugöffnungen aufweisender Transportbänder auf einer Stapellage abgelegt, noch während sich diese Stapellage auf dem Tragboden befindet.

Durch EP 0560 112 A1 sind ein Verfahren und eine Vorrichtung gemäß den Oberbegriffen der Ansprüche 1 und 13 bekannt.

Durch EP 2 772 444 A1 ist ein Verfahren zum Umgang mit Zwischenlagen während eines Umgangs mit Artikeln bekannt. Der Umgang mit Artikeln umfasst ein Aufstapeln eines Stapels mit wenigstens zwei durch eine Zwischenlage getrennten und durch jeweils eine Lage von Artikeln gebildeten Stapellagen an einem Stapelplatz. Der Umgang mit Zwischenlagen umfasst eine Verbringung einer Zwischenlage nach der anderen entlang eines Verbringungswegs von einer Übernahmeposition zu einer Ablegeposition. Eine Zwischenlage wird durch Greifen deren Vorderkante an der Übernahmeposition übernommen. Die Zwischenlage wird während der Verbringung ausschließlich an deren Vorderkante gehalten, wodurch eine sich an die Vorderkante anschließende Partie der Zwischenlage entsprechend der Bewegung, welche die Vorderkante während der Verbringung entlang des Verbringungswegs erfährt, nachgeschleppt wird. Der Verbringungsweg führt von der Übernahmeposition zur Ablegeposition unter Überbrückung einer gegebenenfalls zumindest zeitweilig vorhandenen Niveaudifferenz von einem Übernahmeniveau der Übernahmeposition zu einem Ablegeniveau der Ablegeposition. Die Ablegeposition befindet sich auf einer Lage von Artikeln, noch bevor diese als nächste Stapellage zuoberst auf einen am Stapelplatz zu errichtenden Stapel aufgelegt wird. Die Überbrückung einer gegebenenfalls zumindest zeitweilig vorhandenen Niveaudifferenz vom Übernahmeniveau zum Ablegeniveau startet mit dem Greifen oder unmittelbar nach dem Greifen der Vorderkante einer Zwischenlage. Zumindest die der Überbrückung einer gegebenenfalls zumindest zeitweilig vorhandenen Niveaudifferenz vom Übernahmeniveau zum Ablegeniveau dienenden, zur Zurücklegung des Verbringungswegs erforderlichen Bewegungen sind harmonisch. Das Übernahmeniveau ist gleichbleibend und auch das Ablegeniveau ist gleichbleibend. Der Umgang mit Zwischenlagen umfasst die Verbringung zuvor von einem Zwischenlagenstapel separierter Zwischenlagen. Der Umgang mit Zwischenlagen umfasst eine Vereinzelung von Zwischenlagen eines Zwischenlagenstapels zum Zweck einer Separierung von Zwischenlagen von dem Zwischenlagenstapel. Die Übernahmeposition umfasst zumindest einen Ort, den wenigstens eine die Vorderkante umfassende Partie einer momentan zuoberst auf einem Zwischenlagenstapel aufliegenden Zwischenlage einnimmt. Gegenläufige Bewegungsrichtungen der Zwischenlagen zur Ablegeposition und der zu Stapellagen gruppierten Artikel lassen den Umgang mit Artikeln zumindest so lange wenigstens in horizontaler Richtung räumlich getrennt vom Umgang mit den Zwischenlagen erfolgend erscheinen, bis die Ablegeposition erreicht ist. Erst dann werden Zwischenlagen und Artikel zusammengeführt. Eine Vorrichtung zur Durchführung des Verfahrens umfasst eine entlang eines Verbringungswegs von einer Übernahmeposition zu einer Ablegeposition beweglich angeordnete Greifvorrichtung, welche eine Zwischenlage auf einem Übernahmeniveau in der Übernahmeposition an deren Vorderkante greift, die Verbringung entlang des Verbringungswegs besorgt und dabei eine sich an die Vorderkante anschließende Partie der Zwischenlage entlang des Verbringungswegs nachschleppt, und die zuvor an deren Vorderkante gegriffene Zwischenlage auf einem Ablegeniveau in der Ablegeposition wieder frei gibt. Die Vorrichtung umfasst außerdem einen zumindest in horizontaler Richtung zum Stapelpatz versetzten Bereitstellungsplatz, an dem Lagen von Artikeln bereitgestellt werden, und eine Beladestation, vermittels der eine am Bereitstellungsplatz bereitgestellte Lage von Artikeln nach der anderen unter Überbrückung eines sich durch den in horizontaler Richtung zum Stapelplatz versetzten Bereitstellungsplatz ergebenden horizontalen Abstands sowie eines gegebenenfalls vertikalen Abstands zum Stapelpatz transportiert und dort jeweils zuoberst auf einen bis dato am Stapelplatz errichteten Stapel aufgelegt wird. Die Greifvorrichtung legt durch Freigabe der zuvor an deren Vorderkante gegriffene Zwischenlage in der Ablegeposition die verbrachte Zwischenlage auf einer als nächstes, als oberste Stapellage eines bis dato am Stapelplatz errichteten Stapels abzulegende Lage von Artikeln auf, noch bevor diese Lage von Artikeln am Stapelplatz abgelegt ist.

Aufgabe der Erfindung ist, ein Verfahren und eine Vorrichtung zum Umgang mit Zwischenlagen anzugeben, welche die Nachteile des Standes der Technik beheben und eine hohe Taktung erlauben.

Die obige Aufgabe wird jeweils gelöst durch die Merkmale der unabhängigen Ansprüche. Weitere vorteilhafte Ausgestaltungen werden durch die Unteransprüche beschrieben.

Ein erster Gegenstand der Erfindung betrifft demnach ein Verfahren zum Umgang mit Zwischenlagen während eines Umgangs mit Artikeln, welcher Umgang mit Artikeln das Aufstapeln von aus einem oder mehreren gruppierten Artikeln zusammengestellten Lagen von Artikeln gebildeten Stapellagen an einem Stapelplatz zu einem Stapel mit wenigstens zwei durch eine Zwischenlage getrennten und durch jeweils eine Lage von Artikeln gebildeten Stapellagen vorsieht. Die Lagen von Artikeln werden hierbei bevorzugt an einem zumindest in horizontaler Richtung zum Stapelpatz versetzten Bereitstellungsplatz bereitgestellt und unter Überbrückung eines sich durch den in horizontaler Richtung zum Stapelplatz versetzten Bereitstellungsplatz ergebenden horizontalen Abstands sowie eines gegebenenfalls vorhandenen vertikalen Abstands zum Stapelpatz transportiert und dort jeweils zuoberst auf einen bis dato am Stapelplatz errichteten Stapel aufgelegt.

Der Umgang mit Zwischenlagen während des Aufstapelns von aus einem oder mehreren gruppierten Artikeln zusammengestellten Lagen von Artikeln gebildeten Stapellagen an einem Stapelplatz zu einem Stapel mit wenigstens zwei durch eine Zwischenlage getrennten und durch jeweils eine Lage von Artikeln gebildeten Stapellagen umfasst eine Verbringung einer Zwischenlage nach der anderen entlang eines von Verbringung einer ersten Zwischenlage zu Verbringung einer zweiten Zwischenlage gleichbleibenden oder veränderlichen Verbringungswegs von einer Übernahmeposition zu einer Ablegeposition.

Das Verfahren sieht vor, eine Zwischenlage durch Greifen deren Vorderkante zu übernehmen. Dadurch zeichnet sich die Übernahmeposition durch das Greifen der Vorderkante der Zwischenlage aus.

Während der Verbringung wird die Zwischenlage dabei ausschließlich an deren Vorderkante gegriffen, wodurch eine sich an die Vorderkante anschließende Partie der Zwischenlage entsprechend der Bewegung, welche die Vorderkante während der Verbringung entlang des Verbringungswegs erfährt, nachgeschleppt wird.

Der Verbringungsweg überbrückt dabei eine beispielsweise zumindest zeitweilig beim Umgang mit Zwischenlagen auftretende Niveaudifferenz zwischen einem beispielsweise gleichbleibenden Übernahmeniveau der Übernahmeposition und einem beispielsweise veränderlichen Ablegeniveau der Ablegeposition. Durch ein beispielsweise veränderliches Ablegeniveau kann beim Umgang mit Zwischenlagen zumindest zeitweilig eine Niveaudifferenz auftreten, wenn sich das Übernahmeniveau zwischen einem ersten Ablegeniveau beispielsweise zu Beginn des Aufstapelns eines Stapels und einem zweiten Ablegeniveau beispielsweise gegen Ende des Aufstapelns eines Stapels befindet. Ebenso kann eine Niveaudifferenz zumindest zeitweilig auftreten, wenn das Ablegeniveau unveränderlich und das Übernahmeniveau veränderlich ist. Eine Niveaudifferenz kann zumindest zeitweilig auch dann auftreten, wenn sowohl das Übernahmeniveau, als auch das Ablegeniveau veränderlich sind. Ständig kann eine Niveaudifferenz auftreten, wenn veränderliche oder unveränderliche Übernahme- und Ablegeniveaus während des gesamten Umgangs mit Zwischenlagen verschieden sind.

Das Verfahren zeichnet sich dadurch aus, dass sich die Ablegeposition auf einer Lage von Artikeln befindet, bevor diese zuoberst auf einen bis dato am Stapelplatz errichteten Stapel aufgelegt bzw. als nächste Stapellage am Stapelplatz abgelegt wird.

Das Ablegen der verbrachten Zwischenlage durch Freigabe deren Vorderkante in der Ablegeposition erfolgt damit auf einer Lage von Artikeln, bevor diese als nächste Stapellage zuoberst auf einen am Stapelplatz zu errichteten Stapel aus mehreren, durch Lagen von Artikeln gebildeten Stapellagen, von denen wenigstens zwei Stapellagen durch eine Zwischenlage getrennt sind, aufgelegt wird

Wird für den Transport einer Lage von Artikeln vom Bereitstellungsplatz zum Stapelplatz eine Beladestation verwendet, so kann das Verfahren demnach vorsehen, dass die Zwischenlage oben auf eine momentan noch nicht am Stapelplatz abgelegte Lage von Artikeln, welche sich beispielsweise noch in der Beladestation befindet, aufgelegt wird.

Eine zuvor in der Übernahmeposition übernommene Zwischenlage ist damit erst mit dem Erreichen der Ablegeposition und mit dem Absetzen einer vom Bereitstellungsplatz zum Stapelplatz transportierten und dort zuoberst auf einen bis dato am Stapelplatz errichteten Stapel aufgelegte Lage von Artikeln an den Stapelplatz verbracht. Die Freigabe deren Vorderkante erfolgt jedoch bereits mit dem Erreichen der Ablegeposition beispielsweise auf einer momentan vom Bereitstellungsplatz zum Stapelplatz transportierten Lage von Artikeln, bevor diese Lage von Artikeln als oberste Stapellage auf einen bis dato am Stapelplatz errichteten Stapel abgelegt wird.

Das Verfahren kann demnach vorsehen, dass die Verbringung einer Zwischenlage von der Übernahmeposition zur Ablegeposition zumindest teilweise in zeitlicher Überschneidung erfolgt, während eine beispielsweise an einem Bereitstellungsplatz, beispielsweise auf einer vom Bereitstellungsplatz umfassten Bereitstellungsfläche bereitgestellte Lage von Artikeln zu einem Stapelplatz verbracht wird, um dort als nächste Stapellage eines am Stapelplatz aufzustapelnden Stapels abgelegt zu werden.

Ein solches Verfahren sieht damit vor, bei einem an einem Stapelpatz aus mehreren aus an einem vom Stapelplatz zumindest in horizontaler Richtung räumlich getrennten, verschiedenen Bereitstellungsplatz bereitgestellten Lagen von Artikeln gebildeten Stapellagen aufzustapelnden Stapel, zwischen dessen Stapellagen des fertig gestellten Stapels zumindest eine Zwischenlage vorgesehen ist, die in einem ebenfalls vom Stapelplatz und auch vom Bereitstellungsplatz räumlich getrennten Zwischenlagenstapel bereitgehalten und nach deren Vereinzelung separiert zum Stapelplatz verbracht wird, um während des Aufstapelns mehrerer Lagen von Artikeln zu einem Stapel zwischen wenigstens eine zuletzt als oberste Stapellage auf einen bis dato aufgestapelten Stapel und eine zuoberst auf den bis dato aufgestapelten Stapel aufzulegende Lage von Artikeln eingebracht zu werden, eine vom Zwischenlagenstapel separierte Zwischenlage oder eine Zwischenlage vor oder während der Vereinzelung der Zwischenlagen vom Zwischenlagenstapel an ihrer Vorderkante zu greifen, und mit der Verbringung zum Stapelplatz entlang des Verbringungswegs in der hierfür erforderlichen Richtung frei von einer Verzögerung sofort zu beginnen, ungeachtet einer Niveaudifferenz entsprechend einer vertikalen Höhendifferenz zwischen dem Übernahmeniveau der Übernahmeposition, bei der die Zwischenlage an ihrer Vorderkante vor Beginn der Verbringung gegriffen wird, und dem Ablegeniveau der Ablegeposition, bei der die Zwischenlage am Ende der Verbringung eine momentan von einem Bereitstellungsplatz zum Stapelplatz transportierte Lage von Artikeln erreicht, an ihrer Vorderkante wieder freigegeben wird und dadurch auf eine als nächstes am Stapelplatz als dann bis dato oberste Stapellage eines am Stapelplatz zu errichtenden Stapels abzulegende Lage von Artikeln aufgelegt wird.

Grundsätzlich denkbar ist jedoch auch, die Zwischenlage auf die Lage von Artikeln aufzulegen, noch bevor deren Transport vom Bereitstellungsplatz zum Stapelplatz erfolgt.

Beispielsweise kann die Zwischenlage auf die Lage von Artikeln aufgelegt werden, solange sich diese noch am Bereitstellungsplatz befindet.

Beim Stand der Technik, bei dem die separierten Zwischenlagen von einem mit einem Rollladen mitbewegten Mitnehmerzangenpaar jeweils an ihren Vorderkanten gegriffen werden, muss zwischen zwei aufeinander folgenden Verbringungen zunächst abgewartet werden, bis eine vollständige Lage von Artikeln auf dem Rollladen gruppiert worden ist. Darüber hinaus ist die Freiheit bei der Planung des Aufbaus einer entsprechenden Anlage aufgrund der räumlichen Nähe der Übernahmeposition und der Ablegeposition sowie der Übereinstimmung des Stapelplatzes in horizontaler Richtung mit dem Bereitstellungsplatz für die Artikel sehr stark eingeschränkt.

Beim Stand der Technik, bei dem die Zwischenlagen zu deren Vereinzelung flächig mittels unterdruckbeaufschlagter Saugglocken angehoben und die separierten Zwischenlagen anschließend an den Saugglocken hängend verbracht werden, muss bei der Verbringung zunächst sichergestellt werden, dass sämtliche, über die Fläche der Zwischenlage verteilt angeordnete Saugglocken frei von möglichen Kollisionspartnern kommen, bevor die Verbringung in einer erforderlichen Richtung erfolgen kann, welche den Weg von der Übernahmeposition zur Ablegeposition weist. Hierdurch werden die Verbringungswege lang und die Bewegungsabläufe, die notwendig sind, um eine kollisionsfreie Verbringung sicherzustellen, kompliziert. Auch muss bei einer eine solche Verbringung ausführenden Anlage nach dem Stand der Technik immer gewartet werden, bis eine Lage von Artikeln als bis dato oberste Stapellage eines am Stapelplatz zu errichtenden Stapels abgelegt ist und eine Lage von Artikeln um Lage von Artikeln zum Stapelplatz verbringende, beispielsweise als ein Palettier- oder Jalousiekopf ausgeführte Beladestation einen Kollisionsbereich verlassen hat, bevor die nächste Zwischenlage auf der dann obersten Stapellage des bis dato am Stapelplatz errichteten Stapels aufgelegt werden kann.

Die Erfindung hingegen bedarf weder abzuwarten, bis eine Lage von Artikeln auf der Beladestation gruppiert ist, um eine Lage von Artikeln am Stapelplatz abzulegen, noch abzuwarten, bis eine gruppierte Lage von Artikeln vermittels der Beladestation am Stapelplatz abgelegt ist und die Beladestation den Kollisionsbereich verlassen hat. Stattdessen sieht die Erfindung vor, eine zwischen zwei aufeinanderfolgende Stapellagen des am Stapelplatz aufzustapelnden Stapels einzubringende Zwischenlage einfach oben auf die bereits gruppierte, noch in der Beladestation befindliche Lage von Artikeln abzulegen, woraufhin dann die Beladestation nicht nur die Lage von Artikeln, sondern gleichzeitig auch noch die hierauf bereits abgelegte Zwischenlage am Stapelplatz ablegt.

Dadurch ermöglicht die Erfindung bei jeder Verbringung einer Zwischenlage eine Zeitersparnis gegenüber dem Stand der Technik, was eine höhere erzielbare Taktung zur Folge hat.

Der Umgang mit den Artikeln kann zumindest so lange wenigstens in horizontaler Richtung räumlich getrennt vom Umgang mit den Zwischenlagen erfolgen, bis die Ablegeposition bei der Verbringung erreicht ist. Erst dann werden Zwischenlagen und Artikel zusammengeführt.

Die räumliche Trennung in horizontaler Richtung hat den Vorteil einer großen Planungsfreiheit bei der Entwicklung einer entsprechenden Anlage. Die räumliche Trennung kann beispielsweise einen Verbringungsweg vorsehen, entlang dessen Zurücklegung die Vorderkante einer übernommenen Zwischenlage von der Übernahmeposition bis zur Ablegeposition eine Wegstrecke in horizontaler Richtung zurücklegt, welche dem doppelten oder mehr der Erstreckung der Zwischenlage von deren Vorderkante zu der dieser gegenüberliegenden und die nachgeschleppte Partie abschließenden Hinterkante entspricht.

Die Erfindung erlaubt dadurch die Verbringung von Zwischenlagen bei einer sehr freien Anordnung der Komponenten einer Anlage, bei der sowohl mit Artikeln, als auch mit Zwischenlagen umgegangen wird. Durch die räumliche Trennung erlaubt die Erfindung ferner ohne Zeitverluste einen Umgang mit Artikeln zeitgleich mit dem und unabhängig vom Umgang mit Zwischenlagen. Dies ermöglicht eine hohe Taktung, welche sichergestellt wird, indem mit den Zwischenlagen bis zum Erreichen der Ablegeposition uneingeschränkt und unabhängig vom Umgang mit Artikeln umgegangen werden kann, ohne auf den Umgang mit Artikeln zu achten. Insbesondere erlaubt die Erfindung eine besonders freie Planung einer Anlage, wobei zunächst der Ablauf des Umgangs mit Artikeln geplant werden kann und erst nachdem dieser feststeht, der Umgang mit Zwischenlagen in den Ablauf eingeplant werden kann, da die Erfindung lange Verbringungswege toleriert und gleichzeitig eine höhere Taktung ermöglicht.

Die zum Auflegen am Stapelplatz vorgesehenen Lagen von Artikeln können hierbei auf einer von dem Bereitstellungsplatz umfassten Bereitstellungsfläche bereitgestellt werden. Der Ort des Stapelplatzes ist vom Ort eines solchen, beispielsweise eine Bereitstellungsfläche umfassenden Bereitstellungsplatzes zumindest in horizontaler Richtung verschieden. Die Bereitstellungsfläche kann sich auf konstantem Niveau befinden oder bevorzugt durch eine Transferstation gebildet oder von einer solchen umfasst sein, welche beispielsweise von einer Gruppierstation fertig gestellte Lagen von Artikeln auf einem Gruppierniveau übernimmt und beispielsweise einer den Transport vom Bereitstellungsplatz zum Stapelplatz besorgenden Beladestation auf ein veränderliches Beladeniveau entgegenfährt. Hierdurch wird nochmals eine Zeitersparnis erhalten, da an den Schnittstellen zwischen den einzelnen Komponenten - Gruppierstation, Transferstation, Beladestation - geringere bis überhaupt keine Wartezeiten entstehen und darüber hinaus nur kurze Verfahrwege von der Transferstation und der Beladestation zurückgelegt werden müssen, was ebenfalls einer Steigerung der Taktung beiträgt.

Das Verfahren kann zumindest zeitweilig während des Aufstapelns eines Stapels einen Verbringungsweg vorsehen, der vorzugsweise in direkter Richtung und damit mit einer geringstmöglichen Anzahl von Bewegungen zu dessen Zurücklegung auskommend, von der Übernahmeposition zur Ablegeposition unter Überbrückung einer wie zuvor beschrieben gegebenenfalls zumindest zeitweilig vorhandenen Niveaudifferenz vom Übernahmeniveau der Übernahmeposition zum beispielsweise mit zunehmender Höhe eines an einem Stapelplatz aufzustapelnden Stapels veränderlichen Ablegeniveau der Ablegeposition führt. Die Einschränkung, wonach ein solcher Verbringungsweg zumindest zeitweilig auftritt, ergibt sich aus dem Umstand, dass sich während des Aufstapelns eines Stapels dessen Höhe durch die zunehmende Anzahl von bereits in den Stapel eingebrachter Stapellagen ständig verändert, einhergehend mit einer Veränderung der Verbringungswege für die Zwischenlagen. Eine direkte Richtung von Verbringungswegen kann beispielsweise zu Beginn des Aufstapelns sinnvoll sein, wohingegen gegen Ende eine direkte Richtung des Verbringungswegs durch den immer höher aufstehenden Stapel blockiert sein kann.

Das Verfahren sieht außerdem bevorzugt vor, unmittelbar nach der Übernahme einer Zwischenlage mit der Verbringung entlang des Verbringungswegs zu beginnen, ungeachtet des Umstands, ob eine sich an die gegriffene Vorderkante anschließende Partie der Zwischenlage entlang des Verbringungswegs mit Teilen einer Anlage in Berührung kommt, innerhalb oder vermittels welcher Anlage die Zwischenlage von der Übernahmeposition zur Ablegeposition verbracht wird. Dabei kann die Verbringung sofort in einer Richtung entlang des Verbringungswegs beginnen, welche den kürzesten Weg von der Übernahmeposition zur Ablegeposition weist.

Ein Niveauausgleich zwischen dem Übernahmeniveau und dem beispielsweise veränderlichen Ablegeniveau startet hierbei vorzugsweise mit oder unmittelbar nach dem Greifen der Vorderkante einer Zwischenlage und findet synchron mit der Bewegung von der Übernahmeposition zur Ablegeposition statt.

Das Verfahren sieht demnach vor, die biegsame Eigenschaft von Zwischenlagen zu nutzen, um den Verbringungsweg und damit die Dauer der Verbringung beim Umgang mit diesen zu verkürzen, einhergehend mit einer höheren erzielbaren Taktung. Die biegsame Eigenschaft einer Zwischenlage ist hierbei innerhalb weiter Grenzen abhängig davon, ob es sich um eine so genannte massive, paketierte oder laminierte Zwischenlage oder um eine andere, Eingangs erwähnte Art einer Zwischenlage handelt.

Alternativ oder zusätzlich kann das Verfahren vorsehen, dass die Überbrückung einer gegebenenfalls zumindest zeitweilig vorhandenen Niveaudifferenz vom Übernahmeniveau zum Ablegeniveau mit der Freigabe der Vorderkante einer Zwischenlage endet.

Das Übernahmeniveau kann unveränderlich sein, etwa wenn die Oberseite des Zwischenlagenstapels mit abnehmender Höhe des Zwischenlagenstapels beispielsweise vermittels eines Hubwerks auf gleichbleibendem Niveau gehalten wird, oder wenn die Vereinzelung der Zwischenlagen von der Unterseite des Zwischenlagenstapels her geschieht.

Alternativ kann das Übernahmeniveau beispielsweise mit abnehmender Höhe des Zwischenlagenstapels veränderlich sein, ebenso wie das Ablegeniveau beispielsweise von der Höhe eines an einem Stapelplatz bis dato aufgestapelten Stapels abhängig sein kann.

Der Umgang mit Zwischenlagen kann die Verbringung zuvor von einem Zwischenlagenstapel separierter Zwischenlagen umfassen. Alternativ oder zusätzlich kann der Umgang mit Zwischenlagen eine Vereinzelung von Zwischenlagen eines Zwischenlagenstapels zum Zweck einer Separierung von Zwischenlagen von dem Zwischenlagenstapel umfassen, wobei die Übernahmeposition zumindest einen gegebenenfalls veränderlichen Ort umfasst, den wenigstens eine die Vorderkante umfassende Partie einer momentan zuoberst auf einem Zwischenlagenstapel aufliegenden Zwischenlage einnimmt. Ein von der Übernahmeposition umfasster, gegebenenfalls veränderlicher Ort variiert bevorzugt lediglich hinsichtlich seiner vertikalen Raumkoordinaten, beispielsweise mit abnehmender Höhe eines Zwischenlagenstapels, von dem die Zwischenlagen vereinzelt werden, und/oder mit wachsender Höhe eines am Stapelplatz aufzustapelnden Stapels.

Umfasst der Umgang mit Zwischenlagen die Verbringung zuvor von einem Zwischenlagenstapel separierter Zwischenlagen, so kann das Verfahren vorsehen, dass das Übernahmeniveau, auf dem eine durch eine vorangehende Vereinzelung vom Zwischenlagenstapel vereinzelte Zwischenlage an ihrer Vorderkante gegriffen wird, gleichbleibend oder veränderlich ist.

Umfasst der Umgang mit Zwischenlagen die Verbringung zuvor von einem Zwischenlagenstapel separierter Zwischenlagen, so kann das Verfahren alternativ vorsehen, dass das Übernahmeniveau, auf dem eine durch eine vorangehende Vereinzelung vom Zwischenlagenstapel vereinzelte Zwischenlage an ihrer Vorderkante gegriffen wird, veränderlich ist. In diesem Fall sieht das Verfahren eine der Übernahme vorangehende Vereinzelung von Zwischenlagen des Zwischenlagenstapels vor, bei dem die Vereinzelung auf einem mit abnehmender Höhe des Zwischenlagenstapels absinkenden Vereinzelungsniveau stattfindet. Hierbei bleibt das Übernahmeniveau mit dem Vereinzelungsniveau gleich. Eine die Verbringung besorgende Verbringungsvorrichtung fährt demnach einer die Vereinzelung auf dem Vereinzelungsniveau besorgenden Vereinzelungsvorrichtung entgegen, um eine vom Zwischenlagenstapel separierte Zwischenlage durch Greifen deren Vorderkante zu übernehmen. Hierdurch wird die Summe der Verbringungswege während des Aufstapelns von einem oder mehreren Stapeln am Stapelplatz nochmals verkürzt, indem die zu überbrückenden Niveaudifferenzen durch das Entgegenfahren verkürzt werden, was eine weitere Steigerung der Taktung zur Folge hat.

Zur Vereinzelung von Zwischenlagen eines Zwischenlagenstapels zum Zweck einer Separierung, ist bevorzugt vorgesehen, die jeweilig zuoberst auf dem Zwischenlagenstapel aufliegende Zwischenlage wenigstens im Bereich ihrer Vorderkante zu erfassen, etwa vermittels heb- und senkbaren Saugglocken, die beispielsweise an einem gemeinsamen, vertikal beweglichen Tragarm angeordnet sind, und anschließend die erfasste Zwischenlage zumindest im Bereich ihrer Vorderkante vertikal zur Übernahmeposition anzuheben. Hat die Vorderkante der Zwischenlage die Übernahmeposition erreicht, wird die Vorderkante gegriffen und die Verbringung entlang des Verbringungswegs zur Ablegeposition beginnt. Ein sich aus einer solchen Separierung ergebender Vorteil gegenüber dem Stand der Technik ist, dass zwischen Erfassung und der Übergabe an der Übernahmeposition lediglich eine Vertikalbewegung der Vorderkante der zu vereinzelnden Zwischenlage stattfindet. Beim Stand der Technik hingegen muss zusätzlich eine Horizontalbewegung ausgeführt werden.

Umfasst der Umgang mit Zwischenlagen eine Vereinzelung von Zwischenlagen eines Zwischenlagenstapels zum Zweck einer Separierung von Zwischenlagen von dem Zwischenlagenstapel, so kann das Übernahmeniveau, bei dem bereits zum Zweck einer Vereinzelung die zuoberst auf dem Zwischenlagenstapel liegende Zwischenlage, oder die zuunterst im Zwischenlagenstapel befindliche Zwischenlage an ihrer Vorderkante gegriffen wird, gleichbleibend sein. Werden die Zwischenlagen von oben her vom Zwischenlagenstapel vereinzelt, so kann ein gleichbleibendes Vereinzelungs- und Übernahmeniveau beispielsweise durch einen vertikal verfahrbaren Zwischenlagenstapel erhalten werden, wodurch das Niveau der durch die zuoberst auf dem Zwischenlagenstapel aufliegende Zwischenlage gebildeten Oberfläche des Zwischenlagenstapels konstant gehalten werden kann.

Umfasst der Umgang mit Zwischenlagen eine Vereinzelung von Zwischenlagen eines Zwischenlagenstapels zum Zweck einer Separierung von Zwischenlagen von dem Zwischenlagenstapel, so kann das Übernahmeniveau, bei dem bereits zum Zweck einer Vereinzelung die zuoberst auf dem Zwischenlagenstapel liegende Zwischenlage an ihrer Vorderkante gegriffen wird, mit durch eine abnehmende Anzahl von Zwischenlagen im Zwischenlagenstapel abnehmender Höhe des Zwischenlagenstapels veränderlich sein.

Umfasst der Umgang mit Zwischenlagen eine Vereinzelung von Zwischenlagen eines Zwischenlagenstapels zum Zweck einer Separierung von Zwischenlagen von dem Zwischenlagenstapel, so kann hierzu vorgesehen sein, zumindest die oberste oder die unterste Zwischenlage des Zwischenlagenstapels, je nachdem ob die Vereinzelung von oben oder von unten am Zwischenlagenstapel erfolgt, in Richtung deren Vorderkante weg von einer vertikal auf dem Zwischenlagenstapel aufstehenden Achse aus dem Zwischenlagenstapel auszulenken, aus welcher Richtung kommen die Übernahme der Zwischenlagen erfolgt. Dadurch kann die entsprechend zuoberst auf oder zuunterst im Zwischenlagenstapel befindliche Zwischenlage zu deren Vereinzelung und gleichzeitiger Verbringung an ihrer Vorderkante gegriffen werden.

Eine beschriebene Auslenkung kann beispielsweise durch eine Abstreifvorrichtung, wie etwa ein Abstreifblech erfolgen, welche in Richtung der auf dem Zwischenlagenstapel aufstehenden Achse ortsfest relativ zu dessen Ober- oder Unterseite angeordnet ist, so dass die der Ober- oder Unterseite durch abnehmende Höhe des Zwischenlagenstapels bzw. abnehmende Anzahl von Zwischenlagen im Zwischenlagenstapel durch fortschreitende Vereinzelung näher rückenden Zwischenlagen durch die Abstreifvorrichtung seitlich aus dem Zwischenlagenstapel ausgelenkt werden.

Die Abstreifvorrichtung kann beispielsweise Vibrationen ausführen, um die Auslenkung zu unterstützen oder zumindest mit zu bewirken.

Das Verfahren kann darüber hinaus vorsehen, dass die Zwischenlage während deren Verbringung von der Übernahmeposition zur Ablegeposition zumindest abschnittsweise von Teilen einer Anlage zum Umgang mit Zwischenlagen während eines Umgangs mit Artikeln, wie etwa einer Anlage zum Aufstapeln oder einer Errichtung eines Stapels an einem Stapelplatz aus mehreren, aus Lagen von Artikeln gebildeten Stapellagen, von denen wenigstens zwei Stapellagen im fertigen Stapel durch eine Zwischenlage getrennt sind, gestützt wird, innerhalb welcher Anlage die Zwischenlage von der Übernahmeposition zur Ablegeposition verbracht wird.

Bei den die Zwischenlage zumindest abschnittsweise während ihrer Verbringung von der Übernahmeposition zur Ablegeposition stützenden Teilen der Anlage kann es sich während der Verbringung um unterschiedliche Teile handeln.

Vorzugsweise handelt es sich bei den die Zwischenlage zumindest abschnittsweise während ihrer Verbringung von der Übernahmeposition zur Ablegeposition stützenden Teilen der Anlage zumindest entlang eines Abschnitts des Wegs der Verbringung um Teile einer die Verbringung besorgenden Vorrichtung.

Wichtig ist hervorzuheben, dass das Verfahren eine Einbringung von Zwischenlagen als Boden- und/oder Decklagen in den Stapel beispielsweise frei von einer Leerfahrt einer Beladestation vorsehen kann. Dabei kann die Ablegeposition beispielsweise zu Beginn und/oder zum Ende des Errichtens eines Stapels am Stapelplatz direkt an der erforderlichen Stelle liegen, die erreicht werden muss, um am Stapelplatz eine Zwischenlage als Boden- und/oder Decklage abzulegen.

Ein zweiter Gegenstand der Erfindung betrifft eine Vorrichtung zur Durchführung eines zuvor beschriebenen Verfahrens zum Umgang mit Zwischenlagen während eines Umgangs mit Artikeln, welcher das Aufstapeln von aus einem oder mehreren gruppierten Artikeln zusammengestellten Lagen von Artikeln gebildeten Stapellagen an einem Stapelplatz zu einem Stapel mit wenigstens zwei durch eine Zwischenlage getrennten und durch jeweils eine Lage von Artikeln gebildeten Stapellagen vorsieht.

Die Vorrichtung umfasst einen zumindest in horizontaler Richtung zum Stapelpatz versetzten Bereitstellungsplatz, an dem Lagen von Artikeln bereitgestellt werden. Darüber hinaus umfasst die Vorrichtung eine Beladestation, vermittels der eine am Bereitstellungsplatz bereitgestellte Lage von Artikeln nach der anderen unter Überbrückung eines sich durch den in horizontaler Richtung zum Stapelplatz versetzten Bereitstellungsplatz ergebenden horizontalen Abstands sowie eines gegebenenfalls vorhandenen vertikalen Abstands zum Stapelpatz transportiert und dort jeweils zuoberst auf einen bis dato am Stapelplatz errichteten Stapel aufgelegt wird.

Die Vorrichtung umfasst außerdem eine entlang eines aufgrund gegebenenfalls veränderlicher Übernahme- und/oder Ablegeniveaus beispielsweise veränderlichen Verbringungswegs von einer Übernahmeposition zu einer Ablegeposition beweglich angeordnete Greifvorrichtung, welche eine Zwischenlage auf einem Übernahmeniveau in der Übernahmeposition an deren Vorderkante greift, die Verbringung entlang des Verbringungswegs besorgt und dabei eine sich an die Vorderkante anschließende Partie der Zwischenlage entlang des Verbringungswegs nachschleppt, und die zuvor an deren Vorderkante gegriffene Zwischenlage auf einem Ablegeniveau in der Ablegeposition wieder loslässt, um dadurch die verbrachte Zwischenlage auf einer als nächstes, als oberste Stapellage eines bis dato am Stapelplatz errichteten Stapels abzulegende Lage von Artikeln aufzulegen, noch bevor diese Lage von Artikeln am Stapelplatz abgelegt ist.

Die Vorrichtung kann eine nach oben offene Beladestation umfassen, vermittels welcher eine an einem Bereitstellungsplatz, beispielsweise auf einer vom Bereitstellungsplatz umfassten oder diesen umfassenden Bereitstellungsfläche bereitgestellte, als Stapellage in einen am Stapelplatz aufzustapelnden Stapel einzubringende Lage von Artikeln zum Stapelpatz transportiert werden, wobei sich die Ablegeposition auf der in der Beladestation momentan vom Bereitstellungsplatz zum Stapelplatz transportierten Lage von Artikeln befindet.

Die Beladestation kann einen Palettier- oder Jalousiekopf umfassen.

Vorzugsweise umfasst die Beladestation einen Jalousiekopf, welcher sich bevorzugt permanent oberhalb des Stapelplatzes befindet. In den Jalousiekopf wird eine am Bereitstellungsplatz bereitstehende Lage von Artikeln durch eine seitliche Beladeöffnung eingebracht, indem diese seitlich durch die Beladeöffnung hindurch über den eine Entladeöffnung an der Unterseite des Jalousiekopfs verschließenden Jalousieverschluss geschoben werden. Hierdurch kann allein durch das Überschieben vom Bereitstellungsplatz in den Jalousiekopf der Versatz zwischen Bereitstellungsplatz und Stapelplatz in horizontaler Richtung überbrückt werden. Nachdem sich der beladene Jalousiekopf auf den bis dahin am Stapelplatz errichteten Stapel abgesenkt hat, wird der Jalousiekopf durch öffnen des Jalousieverschlusses entladen. Der Jalousieverschluss kann eine oder zwei gegenläufig bewegliche Jalousien umfassen.

Die Vorrichtung kann eine Transferstation umfassen, welche den Bereitstellungsplatz bilden oder umfassen kann. Bei einer Transferstation handelt es sich vereinfacht dargestellt um eine zwischen einer Gruppierstation, welche Artikel zu Lagen von Artikeln gruppiert, und einer Beladestation, welche den Transport der von der Gruppierstation erzeugten Lagen von Artikeln vom Bereitstellungsplatz zum Stapelplatz besorgt, angeordnete Hebebühne. Die Transferstation übernimmt eine Lage von Artikeln nach der anderen von der Gruppierstation auf einem Gruppierniveau und fährt der Beladestation auf ein Transferniveau entgegen, um die Verfahrwege der Beladestation zu verkürzen und dadurch die Anzahl der innerhalb eines Zeitintervalls möglichen Verfahrwege der Beladestation zu steigern.

Die Vorrichtung kann sich durch einen Verbringungsweg auszeichnen, der zumindest in horizontaler Richtung wenigstens der doppelten Erstreckung der Zwischenlage von deren Vorderkante zu der dieser gegenüberliegenden und die nachgeschleppte Partie abschließenden Hinterkante entspricht

Die Vorrichtung kann ein oder mehrere zwischen der Übernahmeposition und der Ablegeposition angeordnete Abstützelemente aufweisen, über welche die sich an die Vorderkante anschließende, nachgeschleppte Partie der Zwischenlage von der Greifvorrichtung während der Verbringung gezogen wird.

Das oder die Abstützelemente können vertikal beweglich angeordnet sein, wobei sich ein Abstützelementeniveau, welches ein Abstützelement an seiner Abstützelementposition zwischen der Übernahmeposition und der Ablegeposition einnimmt, unterhalb des jeweiligen Greiferniveaus befindet, welches die Greifvorrichtung bei der Passage des jeweiligen Abstützelements entlang des Verbringungswegs einnimmt.

Die Vorrichtung kann darüber hinaus eine an der den Vorderkanten der im Zwischenlagenstapel befindlichen Zwischenlagen abgewandte Hinterseite des Zwischenlagenstapels vorgesehene Abstreifvorrichtung, wie etwa ein Abstreifblech umfassen. Die Abstreifvorrichtung ist bevorzugt in Richtung einer auf dem Zwischenlagenstapel aufstehenden Achse ortsfest relativ zu dessen Ober- oder Unterseite angeordnet, so dass die der Ober- oder Unterseite durch abnehmende Höhe des Zwischenlagenstapels bzw. abnehmende Anzahl von Zwischenlagen im Zwischenlagenstapel durch fortschreitende Vereinzelung näher rückenden Zwischenlagen durch die Abstreifvorrichtung seitlich aus dem Zwischenlagenstapel ausgelenkt werden.

Hierdurch kann die Übernahme durch Greifen einer Zwischenlage an deren Vorderkante bereits am Zwischenlagenstapel erfolgen, wodurch durch die Verbringung gleichzeitig eine Vereinzelung der Zwischenlagen des Zwischenlagenstapels stattfinden kann. Hierdurch kann im Vergleich zur Übernahme einer bereits vom Zwischenlagenstapel separierten Zwischenlage eine ansonsten notwendige Vereinzelungsvorrichtung eingespart werden.

Die Abstreifvorrichtung kann ein oder mehrere angetriebene Unwuchtelemente umfassen um Vibrationen auszuführen, welche die seitliche Auslenkung zumindest der obersten oder der untersten Zwischenlage in Richtung deren Vorderkante aus dem Zwischenlagenstapel heraus unterstützen oder zumindest mit bewirken.

Alternativ zur Abstreifvorrichtung kann die Vorrichtung eine Vereinzelungsvorrichtung umfassen, welche Zwischenlagen vom Zwischenlagenstapel vereinzelt und die daraufhin vom Zwischenlagenstapel separierten Zwischenlagen mit deren Vorderkante voraus an einer Übernahmeposition der Greifvorrichtung übergibt.

Die Vereinzelungsvorrichtung kann in vertikaler Richtung beweglich angeordnet sein, beispielsweise um einer mit fortschreitender Vereinzelung abnehmenden Höhe des Zwischenlagenstapels zu folgen und/oder gegebenenfalls der Greifvorrichtung auf ein gleichbleibendes oder beispielsweise zu Zwecken einer Verkleinerung des Verbringungswegs veränderliches Übernahmeniveau entgegenzufahren.

Vorteile gegenüber dem Stand der Technik sind, dass zur Verbringung von Zwischenlagen entlang eines Verbringungswegs erforderliche Vertikal- und Horizontalbewegungen früher gestartet werden können, indem die Zwischenlagen nur an deren Vorderkanten gegriffen und eine sich an die Vorderkante anschließende Partie nachgeschleppt wird. Hierbei wird die flexible Eigenschaft von Zwischenlagen genutzt, wobei Kollisionen nur der Vorderkante mit Teilen einer Anlage zum Umgang mit Zwischenlagen und Artikeln vermieden werden und Berührungen zwischen der sich an die Vorderkante anschließenden, nachgeschleppten Partie mit ebensolchen Teilen einer Anlage zum Umgang mit Zwischenlagen und Artikeln zugelassen werden.

Hierdurch kann die als ein die erzielbare Taktung maßgeblich beeinflussender, wesentlicher Zeitfaktor identifizierte Verbringung von Zwischenlagen bis zu deren Einbringen zwischen die zuletzt zuoberst am Stapelplatz auf einen Stapel aufgelegte Stapellage und die nächste, auf die oberste Stapellage des bis dato aufgestapelten Stapels aufzulegende Artikellage erheblich beschleunigt werden, wodurch sich eine im Vergleich zum Stand der Technik erheblich höhere Taktung erzielen lässt.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar. Es zeigen in schematischer Darstellung:

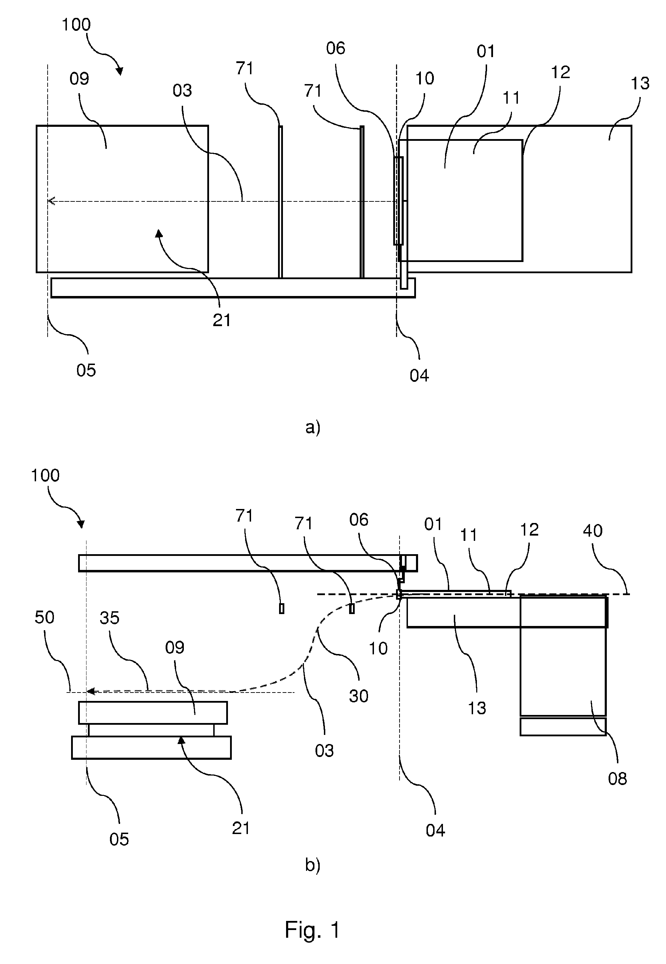

- Fig. 1: eine Veranschaulichung eines Ablaufs eines Verfahrens zum Umgang mit Zwischenlagen während des Umgangs mit Artikeln anhand einer Draufsicht auf eine Vorrichtung zum Umgang mit Zwischenlagen während des Umgangs mit Artikeln in Fig. 1 a) und anhand einer Seitenansicht der Vorrichtung zum Umgang mit Zwischenlagen während des Umgangs mit Artikeln in Fig. 1 b) in einem ersten Moment einer zu Beginn mit der Übernahme einer Zwischenlage durch Greifen deren Vorderkante an der Übernahmeposition startenden Verbringung einer Zwischenlage von der Übernahmeposition zu einer Ablegeposition, in welcher die verbrachte Zwischenlage freigegeben und dadurch auf einer Lage von Artikeln abgelegt wird, bevor diese als nächste Stapellage zuoberst auf einen am Stapelplatz zu errichteten Stapel aus mehreren, durch Lagen von Artikeln gebildeten Stapellagen, von denen wenigstens zwei Stapellagen durch eine Zwischenlage getrennt sind, aufgelegt wird.

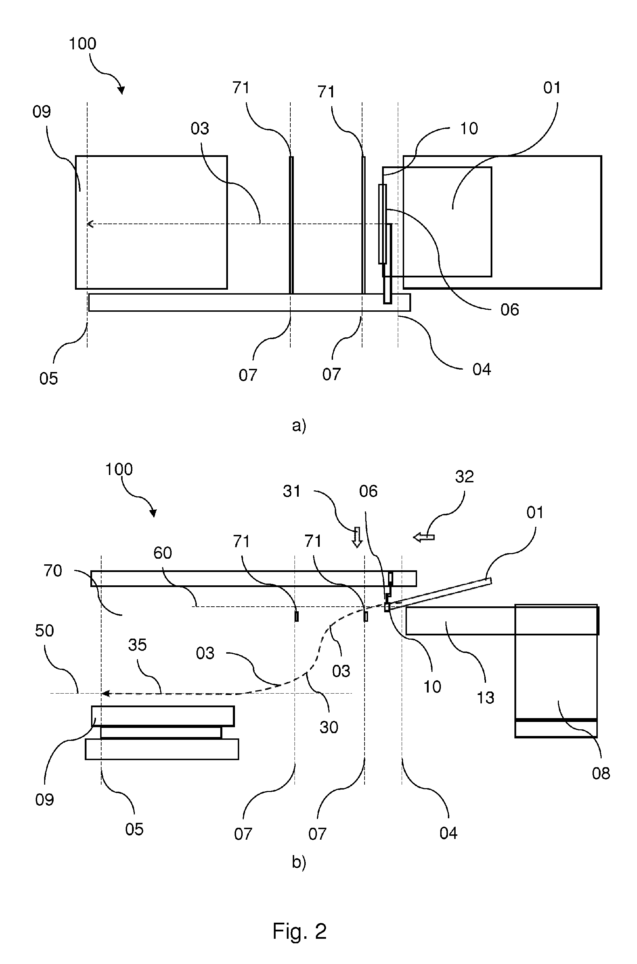

- Fig. 2: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 2 a) und in einer Seitenansicht in Fig. 2b) in einem zweiten Moment der Verbringung einer Zwischenlage von der Übernahmeposition zur Ablegeposition.

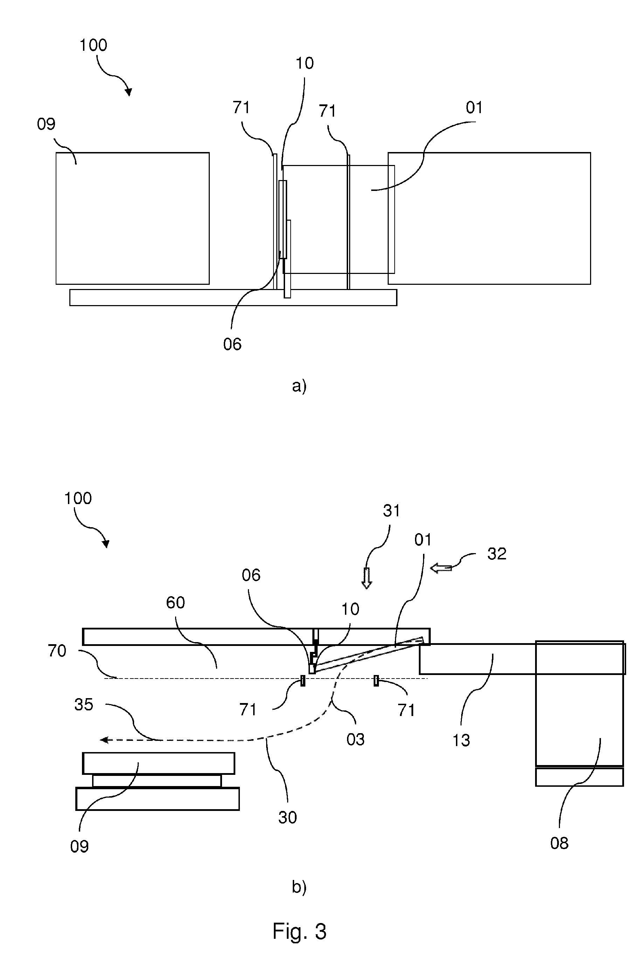

- Fig. 3: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 3 a) und in einer Seitenansicht in Fig. 3b) in einem dritten Moment der Verbringung einer Zwischenlage von der Übernahmeposition zur Ablegeposition.

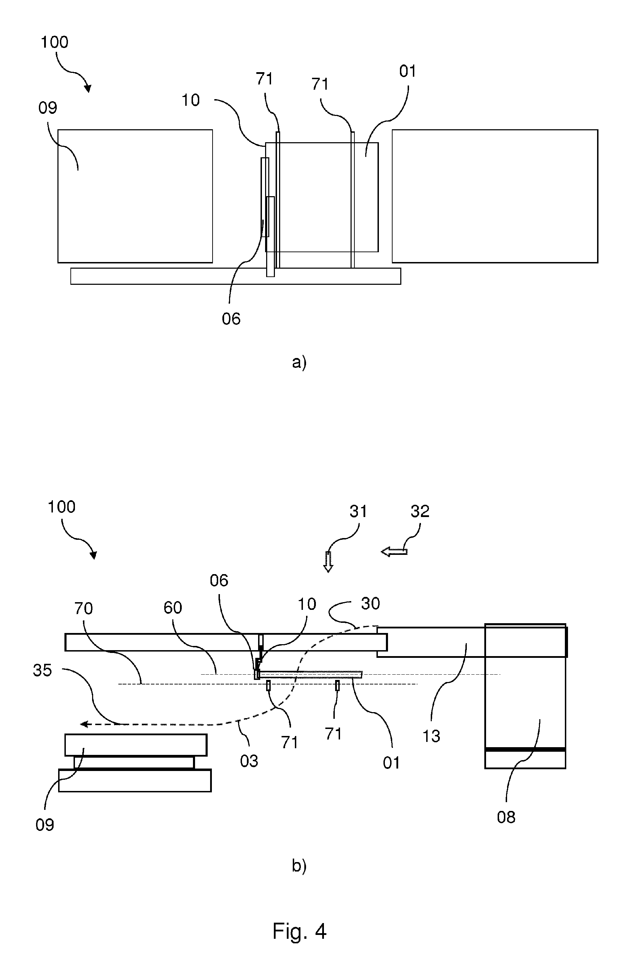

- Fig. 4: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 4 a) und in einer Seitenansicht in Fig. 4b) in einem vierten Moment der Verbringung einer Zwischenlage von der Übernahmeposition zur Ablegeposition.

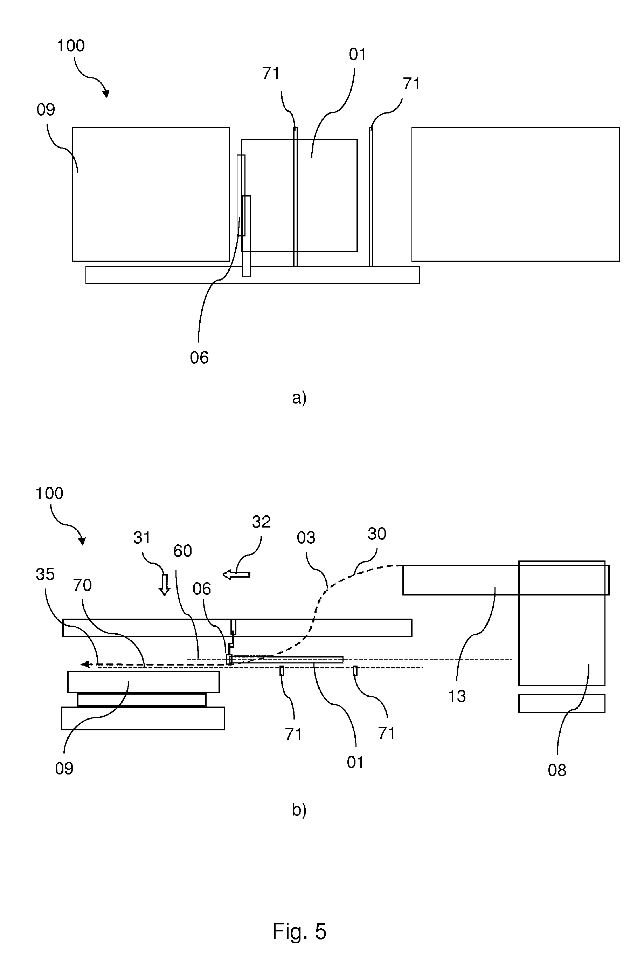

- Fig. 5: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 5 a) und in einer Seitenansicht in Fig. 5b) in einem fünften Moment der Verbringung einer Zwischenlage von der Übernahmeposition zur Ablegeposition.

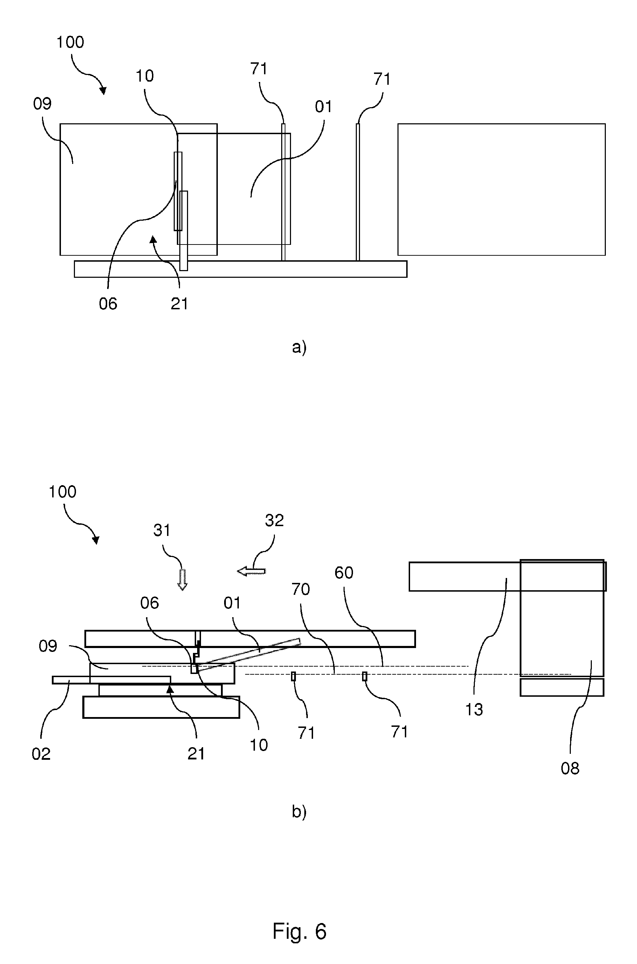

- Fig. 6: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 6 a) und in einer Seitenansicht in Fig. 6b) in einem sechsten Moment der Verbringung einer Zwischenlage von der Übernahmeposition zur Ablegeposition.

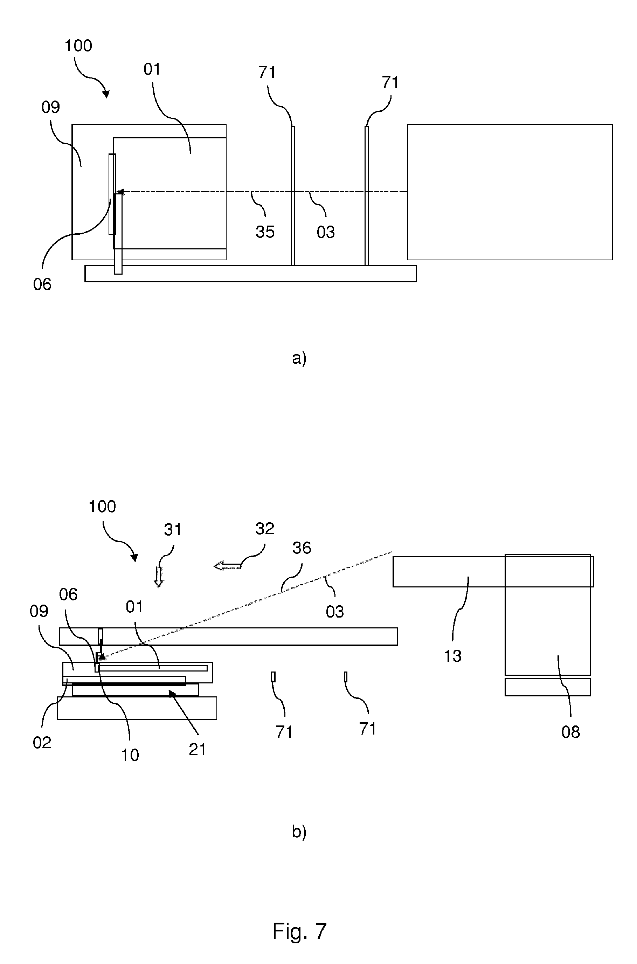

- Fig. 7: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 7 a) und in einer Seitenansicht in Fig. 7b) in einem siebten Moment der Verbringung einer Zwischenlage von der Übernahmeposition zur Ablegeposition.

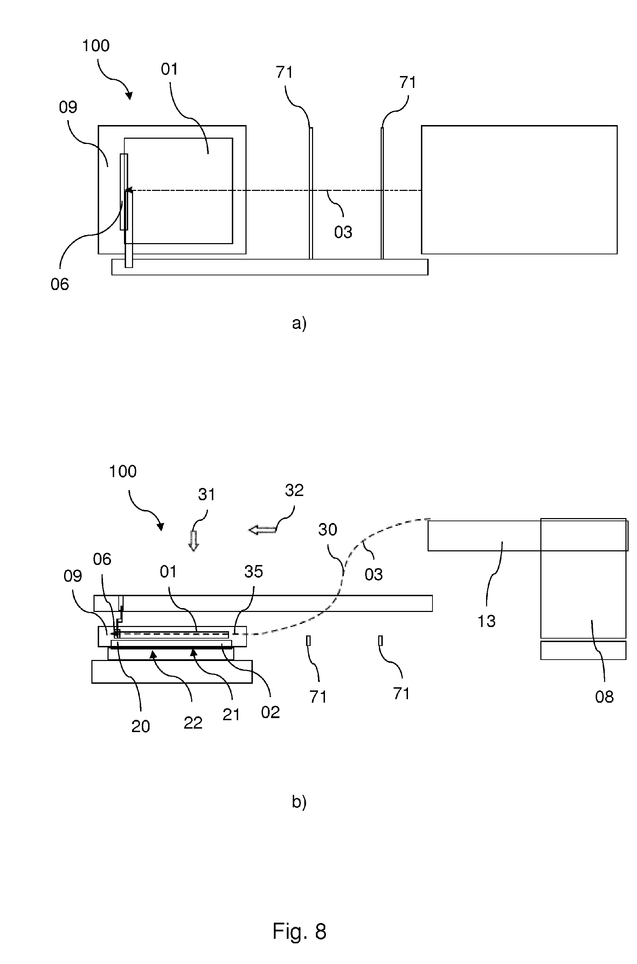

- Fig. 8: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 8 a) und in einer Seitenansicht in Fig. 8b) in einem achten Moment der Verbringung einer Zwischenlage von der Übernahmeposition zur Ablegeposition.

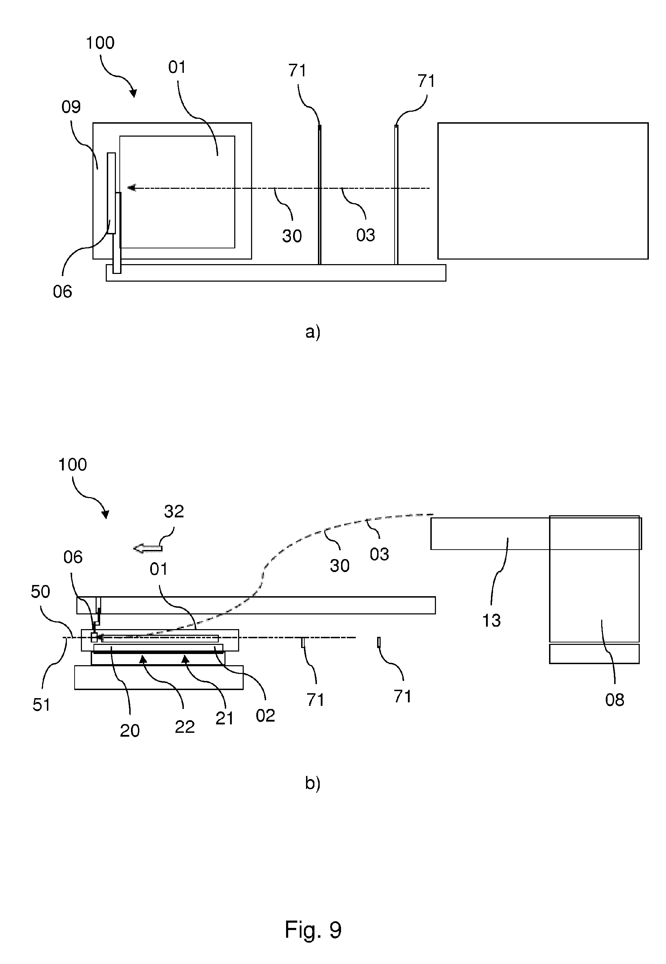

- Fig. 9: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 9 a) und in einer Seitenansicht in Fig. b) in einem letzten Moment zur mit dem Ablegen einer Zwischenlage durch Freigeben deren Vorderkante an der Ablegepositon endenden Verbringung einer Zwischenlage von der Übernahmeposition zu einer Ablegeposition.

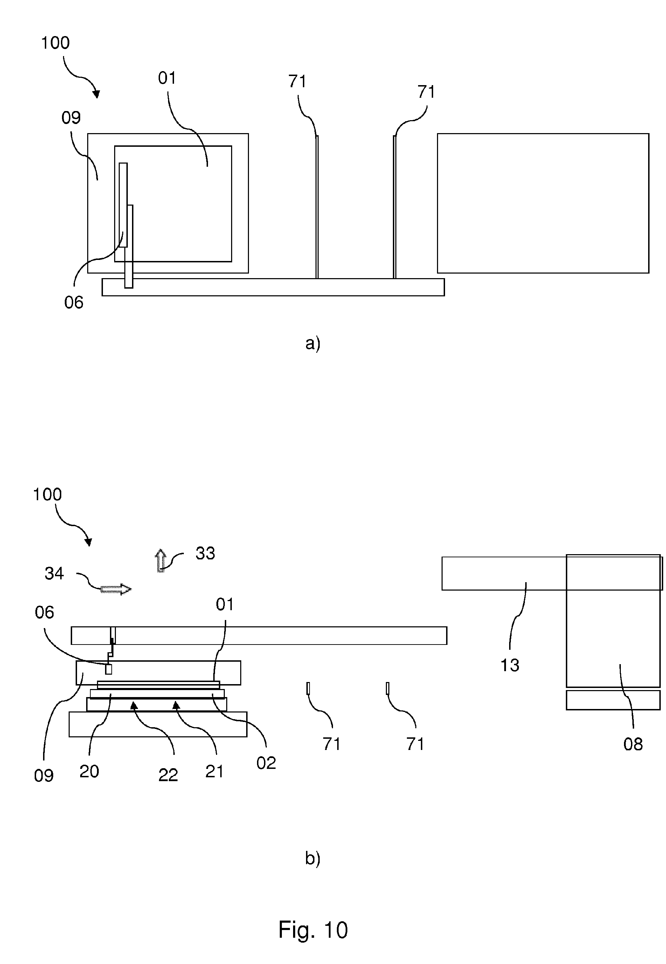

- Fig. 10: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 10 a) und in einer Seitenansicht in Fig. 10 b) in einem ersten Moment, in welchem nach Erreichen der Ablegeposition und der Freigabe der Vorderkante der bereits verbrachten Zwischenlage eine die Verbringung besorgende Greifvorrichtung beginnt, zur Übernahmeposition zurückzufahren, um dort erneut eine Zwischenlage zu übernehmen.

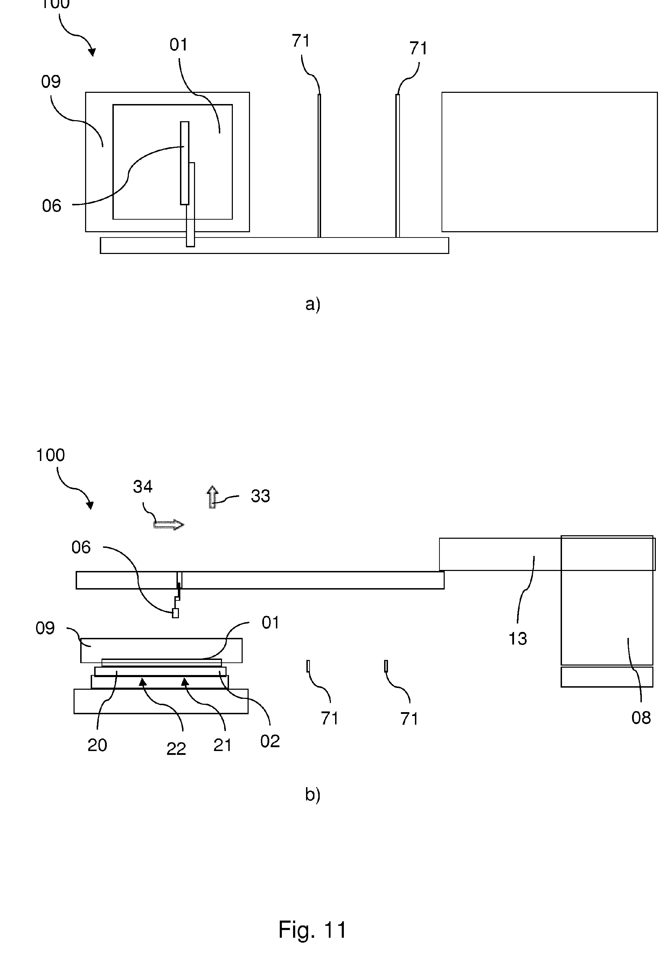

- Fig. 11: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 11 a) und in einer Seitenansicht in Fig. 11 b) in einem zweiten Moment, nachdem die Greifvorrichtung nach Erreichen der Ablegeposition und der Freigabe der Vorderkante der bereits verbrachten Zwischenlage begonnen hat, zur Übernahmeposition zurückzufahren, um dort erneut eine Zwischenlage zu übernehmen.

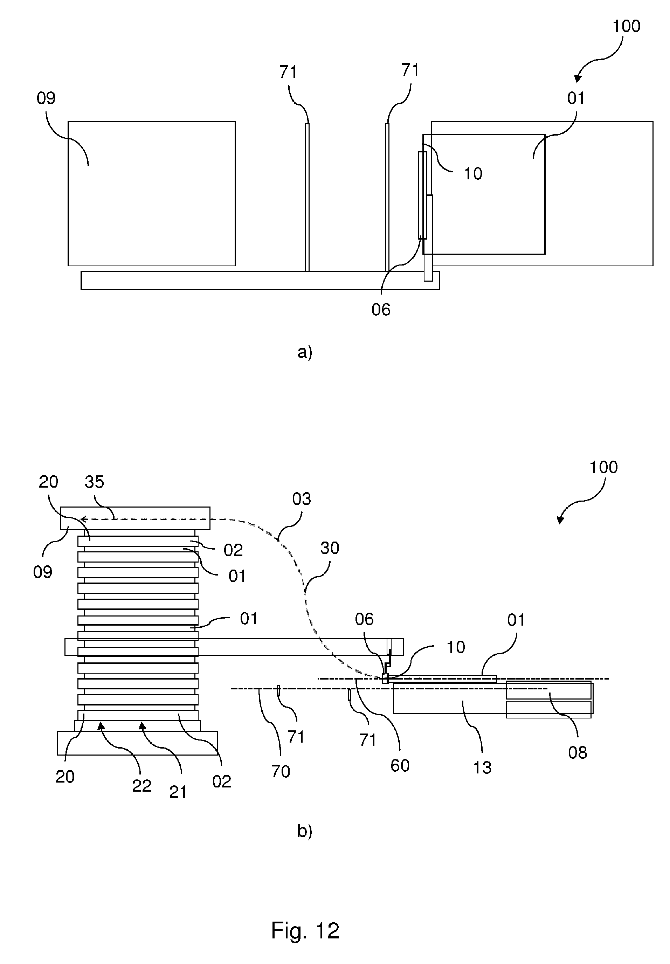

- Fig. 12: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 12 a) und in einer Seitenansicht in Fig. 12 b) in einem ersten Moment einer zu Beginn mit der Übernahme einer Zwischenlage durch Greifen deren Vorderkante an der Übernahmeposition startenden Verbringung einer weiteren Zwischenlage von der Übernahmeposition zu einer Ablegeposition, in welcher die verbrachte Zwischenlage freigegeben und dadurch auf einer Lage von Artikeln abgelegt wird, bevor diese als nächste Stapellage zuoberst auf einen am Stapelplatz zu errichteten Stapel aus mehreren, durch Lagen von Artikeln gebildeten Stapellagen, von denen wenigstens zwei Stapellagen durch eine Zwischenlage getrennt sind, aufgelegt wird.

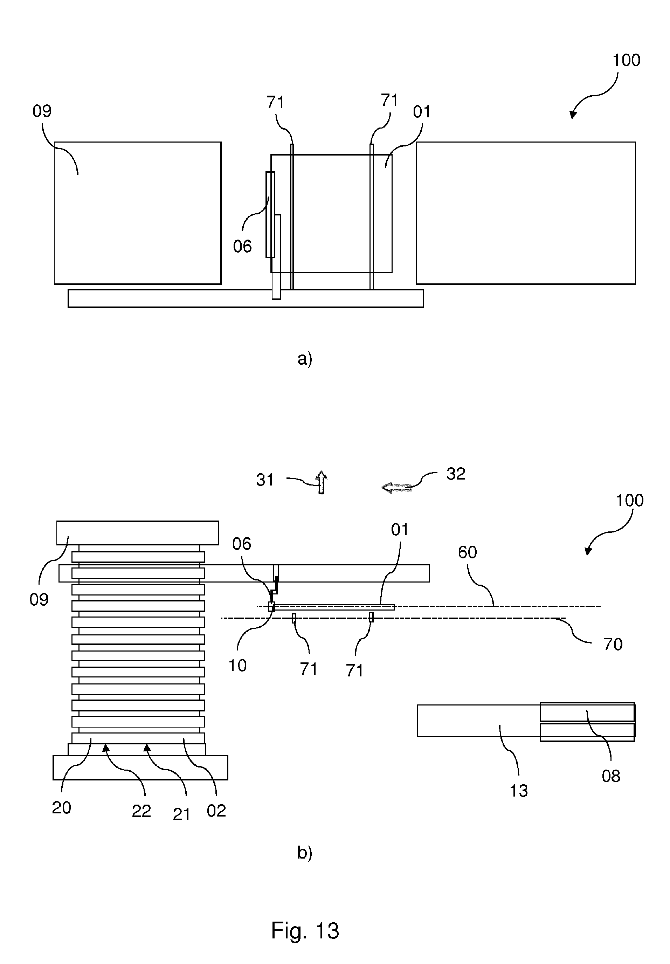

- Fig. 13: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 13 a) und in einer Seitenansicht in Fig. 13 b) in einem zweiten Moment der Verbringung einer weiteren Zwischenlage von der Übernahmeposition zur Ablegeposition.

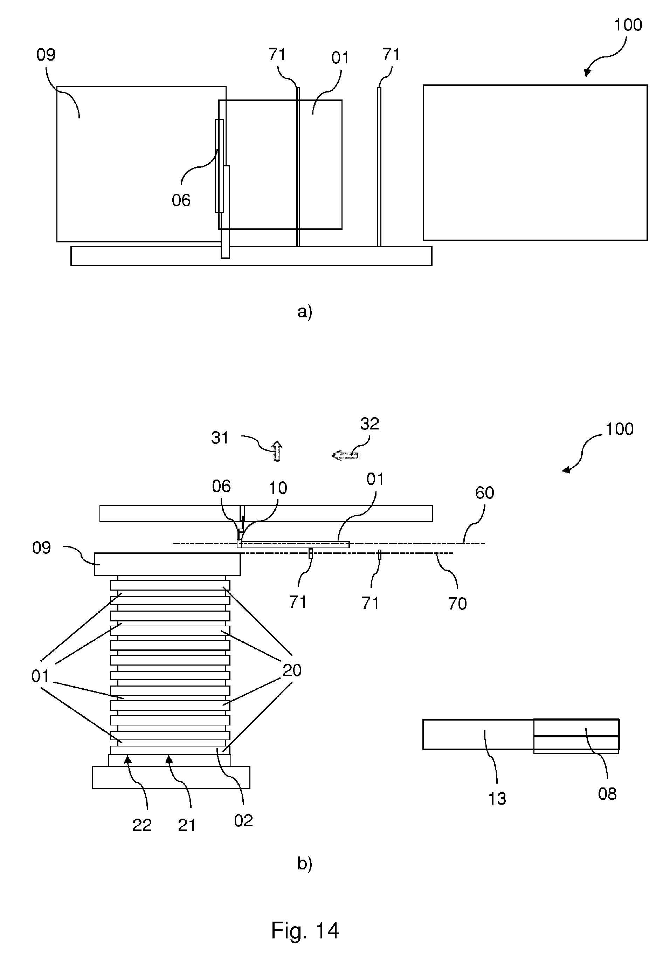

- Fig. 14: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 14 a) und in einer Seitenansicht in Fig. 14 b) in einem dritten Moment der Verbringung einer weiteren Zwischenlage von der Übernahmeposition zur Ablegeposition.

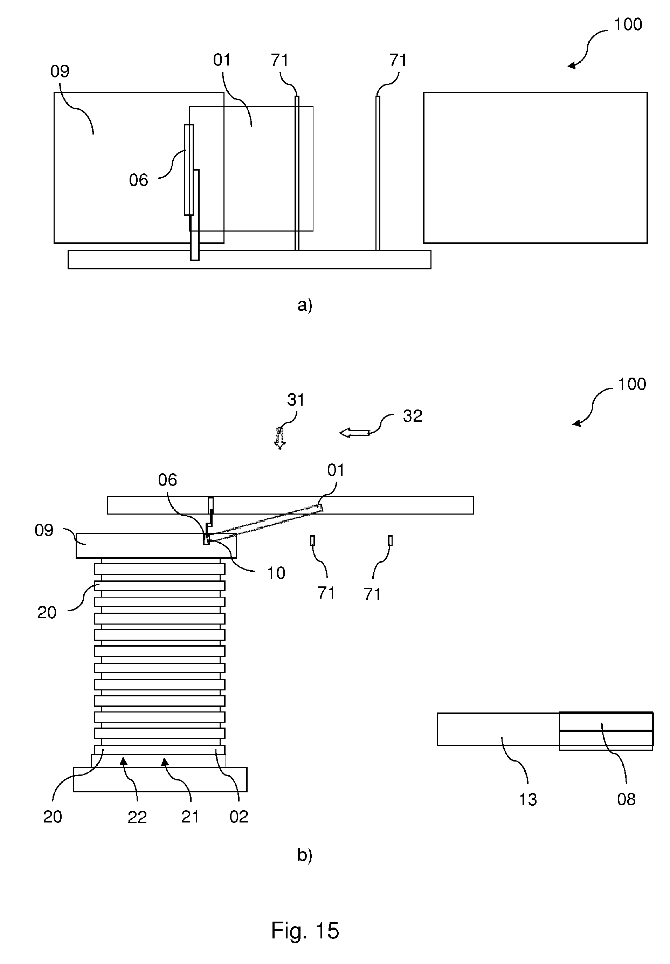

- Fig. 15: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 15 a) und in einer Seitenansicht in Fig. 15 b) in einem vierten Moment der Verbringung einer weiteren Zwischenlage von der Übernahmeposition zur Ablegeposition.

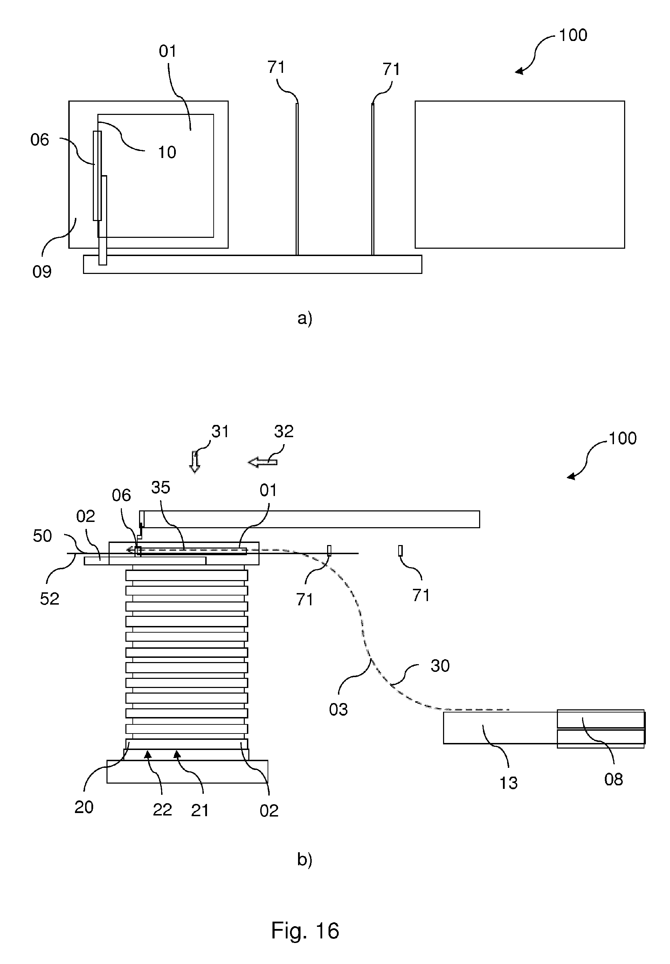

- Fig. 16: eine Veranschaulichung eines Ablaufs eines Verfahrens zum Umgang mit Zwischenlagen während des Umgangs mit Artikeln anhand der Vorrichtung aus Fig. 1 in einer Draufsicht in Fig. 16 a) und in einer Seitenansicht in Fig. 16 b) in einem fünften Moment der Verbringung einer weiteren Zwischenlage von der Übernahmeposition zur Ablegeposition unmittelbar vor dem Erreichen der Ablegeposition.

Eine in Fig. 1 a) bis 16b) dargestellte Vorrichtung 100 zum Umgang mit Zwischenlagen 01 während des Umgangs mit Artikeln 02 umfasst im Wesentlichen eine entlang eines beispielsweise veränderlichen, durch Pfeile 03 angedeuteten Verbringungswegs von einer Übernahmeposition 04 zu einer Ablegeposition 05 beweglich angeordnete Greifvorrichtung 06. Die Greifvorrichtung 06 greift eine Zwischenlage 01 auf einem Übernahmeniveau 40 in der Übernahmeposition 04 an deren Vorderkante 10. Darüber hinaus besorgt die Greifvorrichtung 06 die Verbringung entlang des durch Pfeile 03 angedeuteten Verbringungswegs. Die Greifvorrichtung 06 schleppt dabei eine sich an die Vorderkante 10 anschließende Partie 11 der Zwischenlage 01 entlang des durch Pfeile 03 angedeuteten Verbringungswegs nach. Die Greifvorrichtung 06 gibt die zuvor an deren Vorderkante 10 gegriffene Zwischenlage 01 auf einem Ablegeniveau 50 in der Ablegeposition 05 wieder frei. Der durch Pfeile 03 angedeutete Verbringungsweg kann zumindest in horizontaler Richtung wenigstens der doppelten Erstreckung der Zwischenlage 01 von deren Vorderkante 10 zu der dieser gegenüberliegenden und die nachgeschleppte Partie 11 abschließenden Hinterkante 12 entsprechen.

Der Umgang mit Artikeln 02, während dem der Umgang mit Zwischenlagen 01 stattfindet, sieht wie in Fig. 1a) bis 16b) dargestellt ein Aufstapeln von aus einem oder mehreren gruppierten Artikeln 02 zusammengestellten Lagen von Artikeln 02 gebildeten Stapellagen 20 an einem Stapelplatz 21 zu einem Stapel 22 mit wenigstens zwei durch eine Zwischenlage 01 getrennten und durch jeweils eine Lage von Artikeln 02 gebildeten Stapellagen 20 vor.

Die Vorrichtung 100 umfasst außerdem einen zumindest in horizontaler Richtung zum Stapelpatz 21 versetzten Bereitstellungsplatz, an dem Lagen von Artikeln 02 bereitgestellt werden.

Darüber hinaus umfasst die Vorrichtung 100 eine Beladestation 09, vermittels der eine am Bereitstellungsplatz bereitgestellte Lage von Artikeln 02 nach der anderen unter Überbrückung eines sich durch den in horizontaler Richtung zum Stapelplatz 21 versetzten Bereitstellungsplatz ergebenden horizontalen Abstands sowie eines gegebenenfalls vertikalen Abstands zum Stapelpatz 21 transportiert und dort jeweils zuoberst auf einen bis dato am Stapelplatz 21 errichteten Stapel 22 aufgelegt wird.

Die Vorrichtung 100 zeichnet sich dadurch aus, dass die Greifvorrichtung 07 durch Freigabe der zuvor an deren Vorderkante 10 gegriffene Zwischenlage 01 in der Ablegeposition 05 die verbrachte Zwischenlage 01 auf einer als nächstes, als oberste Stapellage 20 eines bis dato am Stapelplatz 21 errichteten Stapels 22 abzulegende Lage von Artikeln 02 auflegt, noch bevor diese Lage von Artikeln 02 am Stapelplatz 21 abgelegt ist.

Die Vorrichtung 100 kann eine nach oben offene Beladestation 09 umfassen, vermittels welcher eine an einem Bereitstellungsplatz, beispielsweise auf einer vom Bereitstellungsplatz umfassten oder diesen umfassenden Bereitstellungsfläche bereitgestellte, als Stapellage 20 in einen am Stapelplatz 21 aufzustapelnden Stapel 22 einzubringende Lage von Artikeln 02 zum Stapelpatz 21 transportiert werden. Die nach oben offene Beladestation 09 ermöglicht, dass sich die Ablegeposition 05 auf der in der Beladestation 09 momentan vom Bereitstellungsplatz zum Stapelplatz 21 transportierten Lage von Artikeln 02 befindet.

Die Beladestation 09 kann einen Jalousiekopf umfassen, welcher sich permanent oberhalb des Stapelplatzes 21 befindet. In den Jalousiekopf wird eine am Bereitstellungsplatz bereitstehende Lage von Artikeln 02 durch eine seitliche Beladeöffnung eingebracht, indem diese seitlich durch die Beladeöffnung hindurch über den eine Entladeöffnung an der Unterseite des Jalousiekopfs verschließenden Jalousieverschluss geschoben wird. Der Jalousieverschluss kann eine oder zwei gegenläufig bewegliche Jalousien umfassen. Nachdem sich der beladene Jalousiekopf auf den bis dahin am Stapelplatz 21 errichteten Stapel 22 abgesenkt hat, wird der Jalousiekopf durch Öffnen des Jalousieverschlusses entladen, indem dessen eine oder zwei gegenläufig beweglichen Jalousien einfach unter der vom Jalousieverschluss getragenen Lage von Artikeln 02 weggezogen werden.

Bei einer als Jalousiekopf ausgeführten Beladestation 09 kann allein durch das Überschieben vom Bereitstellungsplatz in die Beladestation 09 der Versatz zwischen Bereitstellungsplatz und Stapelplatz 21 in horizontaler Richtung überbrückt werden.

Die Vorrichtung kann, wie durch Vergleich von Fig. 7 b) und Fig. 16 b) erkennbar ist, eine Transferstation umfassen, welche den Bereitstellungsplatz umfasst und eine Bereitstellungsfläche bildet, auf welcher fertiggestellte Lagen von Artikeln 02 bereitgehalten werden. Bei einer Transferstation handelt es sich vereinfacht dargestellt um eine zwischen einer Gruppierstation, welche Artikel zu Lagen von Artikeln gruppiert, und einer Beladestation 09, welche den Transport der von der Gruppierstation erzeugten Lagen von Artikeln 02 vom Bereitstellungsplatz zum Stapelplatz 21 besorgt, angeordnete Hebebühne. Die Transferstation übernimmt eine Lage von Artikeln 02 nach der anderen von der Gruppierstation auf einem Gruppierniveau und fährt der Beladestation 09 auf ein Transferniveau entgegen, um die Verfahrwege der Beladestation 09 zu verkürzen und dadurch die Anzahl der innerhalb eines Zeitintervalls möglichen Verfahrwege der Beladestation 09 zu steigern.

Um einem durch Pfeile 03 angedeuteten, eine Niveaudifferenz zwischen dem Übernahmeniveau 40 und dem Ablegeniveau 50 überbrückenden Verbringungsweg zu folgen, sind durch Pfeile 31 angedeutete und durch Pfeile 32 angedeutete Bewegungen der Greifvorrichtung 07 in vertikaler Richtung und in horizontaler Richtung notwendig.

Während der Rückbewegung, entlang welcher sich die Greifvorrichtung 06 bewegt, nachdem diese die Ablegeposition 05 erreicht hat und die entlang des durch Pfeile 03 angedeuteten, eine Niveaudifferenz zwischen dem Übernahmeniveau 40 und dem Ablegeniveau 50 überbrückenden Verbringungswegs verbrachte Zwischenlage 01 freigegeben hat, sind ebenfalls durch Pfeile 33 angedeutete Bewegungen der Greifvorrichtung 06 in vertikaler Richtung und durch Pfeile 34 angedeutete Bewegungen der Greifvorrichtung 06 in horizontaler Richtung erforderlich, welche die Greifvorrichtung auf einem vom durch Pfeile 03 angedeuteten Verbringungsweg verschiedenen Rückbewegungsweg zurücklegt.

Die Vorrichtung 100 kann ein oder mehrere zwischen der Übernahmeposition 04 und der Ablegeposition 05 vorgesehene Abstützelemente 71 umfassen. Die sich an die Vorderkante 10 anschließende, nachgeschleppte Partie 11 der Zwischenlage 01 wird von der Greifvorrichtung 06 während der Verbringung entlang des durch Pfeile 03 angedeuteten, gegebenenfalls eine zumindest zeitweilig vorhandene Niveaudifferenz zwischen dem Übernahmeniveau 40 und dem Ablegeniveau 50 überbrückenden Verbringungswegs über die Abstützelemente 71 gezogen.

Die Abstützelemente 71 können vertikal beweglich angeordnet sein, wobei sich ein Abstützelementeniveau 70, welches ein Abstützelement 71 an seiner Abstützelementposition 07 zwischen der Übernahmeposition 04 und der Ablegeposition 05 einnimmt, unterhalb des jeweiligen Greiferniveaus 60 befindet, welches die Greifvorrichtung 06 bei der Passage des jeweiligen Abstützelements 71 entlang eines durch Pfeile 03 angedeuteten Verbringungswegs einnimmt.

Die Vorrichtung 100 kann eine Vereinzelungsvorrichtung 08 umfassen, welche Zwischenlagen 01 von einem Zwischenlagenstapel 13 vereinzelt und die daraufhin vom Zwischenlagenstapel 13 separierten Zwischenlagen 01 mit deren Vorderkante 10 voraus an einer Übernahmeposition 04 der Greifvorrichtung 06 übergibt.

Alle Zwischenlagen 01 des Zwischenlagenstapels 13 sind dabei vorzugsweise gleich ausgerichtet, wobei deren Vorderkanten 10 alle der selben Vorderseite des Zwischenlagenstapels 13 zugewandt sind, und deren Hinterkanten 12 alle der gegenüberliegenden Hinterseite des Zwischenlagenstapels 13 zugewandt sind. Die Vorderkanten 10 der im Zwischenlagenstapel 13 übereinanderliegenden Zwischenlagen 01 bilden dabei in ihrer Summe die Vorderseite des Zwischenlagenstapels 13 und die Hinterkanten 12 der im Zwischenlagenstapel 13 übereinanderliegenden Zwischenlagen 01 bilden dabei in ihrer Summe die Hinterseite des Zwischenlagenstapels 13. Die Vorderkanten 10 sind dabei vorzugsweise derjenigen Richtung zugewandt, aus der kommend die Zwischenlagen 01 zu deren Verbringung zur Ablegeposition 05 vermittels der Greifvorrichtung 06 gegriffen werden.

Die Vereinzelungsvorrichtung 08 kann beispielsweise derart aufgebaut sein, dass eine zuoberst auf dem Zwischenlagenstapel 13 aufliegende Zwischenlage 01 vermittels heb- und senkbaren Saugglocken, die an einem gemeinsamen, horizontal verschiebbaren Schlitten angeordnet sind, zumindest im Bereich deren Vorderkante 10 erfasst, angehoben und mit ihrer Vorderkante 10 voraus der Greifvorrichtung 06 übergeben wird.

Ebenfalls denkbar ist, dass die Vereinzelungsvorrichtung 08 die oberste Zwischenlage 01 von einem Zwischenlagenstapel 13 abnimmt, indem eine Hebevorrichtung mit mehreren an ihr entlang der Länge und Breite der Erstreckung einer auf dem Zwischenlagenstapel 13 zuoberst liegenden Zwischenlage 01 angeordnete Saugglocken auf die Oberseite des Zwischenlagenstapels 13 abgesenkt und wieder angehoben wird, wodurch die oberste Zwischenlage 01 angesaugt und vom Zwischenlagenstapel 13 abgehoben wird. Nach dem Anheben wird die vom Zwischenlagenstapel 13 separierte Zwischenlage 01 mit Ihrer Vorderkante 10 voran der Greifvorrichtung 06 übergeben.

Grundsätzlich denkbar ist auch, dass die Zwischenlagen 01 während deren Vereinzelung vom Zwischenlagenstapel 13 gedreht oder gewendet werden. In diesem Fall bilden diejenigen Kanten der Zwischenlagen 01, deren Vorderkanten 10, welche nach deren Separierung vom Zwischenlagenstapel 13 zum Zweck deren Verbringung zur Ablegeposition 05 gegriffen werden.

Hierzu kann die Vereinzelungsvorrichtung 08 alternativ vorsehen, eine zuoberst auf dem Zwischenlagenstapel 13 aufliegende Zwischenlage 01 im Bereich deren Vorderkante 10 vermittels einer oder mehrerer Saugglocken anzusaugen und die Vorderkante 10 entlang einer Zykloidenbahn zurückzuziehen, wobei die Zwischenlage 01 gewendet wird, so dass deren zuvor nach unten weisende Seite nunmehr nach oben weist. Die dabei zuvor im Zwischenlagenstapel 13 der Greifvorrichtung 06 abgewandte Vorderkante 10 der so vom Zwischenlagenstapel 13 separierten Zwischenlage 01 weist nunmehr in Richtung der Greifvorrichtung 06, so dass sie von diesem an der Übergabeposition 04 gegriffen und zur Ablegeposition 05 verbracht werden kann.

Die Vereinzelungsvorrichtung 08 kann in vertikaler Richtung beweglich angeordnet sein, beispielsweise um einer mit fortschreitender Vereinzelung abnehmenden Höhe des Zwischenlagenstapels 13 zu folgen und/oder gegebenenfalls der Greifvorrichtung 06 auf ein gleichbleibendes oder beispielsweise zu Zwecken einer Verkleinerung des durch Pfeile 03 angedeuteten, gegebenenfalls zumindest zeitweilig eine Niveaudifferenz zwischen dem Übernahmeniveau 40 und dem Ablegeniveau 50 überbrückenden Verbringungswegs veränderliches Übernahmeniveau 40 entgegenzufahren.

Eine zuvor beschriebene Vorrichtung 100 erlaubt die Durchführung eines nachfolgend anhand der verschiedenen Momentaufnahmen der in den Fig. 1a) bis 16b) dargestellten Vorrichtung 100 erläuterten Verfahrens.

Ein anhand der verschiedenen Momentaufnahmen der in den Fig. 1a) bis 16b) dargestellten Vorrichtung 100 in seinem Ablauf ganz oder in Teilen dargestelltes Verfahren zum Umgang mit Zwischenlagen 01 während des Umgangs mit Artikeln 02 sieht vor, dass der Umgang mit Artikeln 02 ein Aufstapeln eines Stapels 22 mit wenigstens zwei durch eine Zwischenlage 01 getrennten und durch jeweils eine Lage von Artikeln 02 gebildeten Stapellagen 20 an einem Stapelplatz 21 umfasst, wie dies in Fig. 1 bis Fig. 16 dargestellt ist, und dass der Umgang mit Zwischenlagen 01 eine Verbringung einer Zwischenlage 01 nach der Anderen entlang eines durch Pfeile 03 angedeuteten Verbindungswegs von einer Übernahmeposition 04 zu einer Ablegeposition 05 umfasst.

Das Verfahren sieht dabei vor, dass eine Zwischenlage 01 durch Greifen deren Vorderkante 10 an der Übernahmeposition 04 übernommen wird.

Das Verfahren sieht darüber hinaus vor, dass die Zwischenlage 01 während der Verbringung ausschließlich an deren Vorderkante 10 gehalten wird, wodurch eine sich an die Vorderkante 10 anschließende Partie 11 der Zwischenlage 01 entsprechend der Bewegung, welche die Vorderkante 10 während der Verbringung entlang des durch Pfeile 03 angedeuteten Verbringungswegs erfährt, nachgeschleppt wird.

Das Verfahren sieht außerdem vor, dass der durch Pfeile 03 angedeutete Verbringungsweg von der Übernahmeposition 04 zur Ablegeposition 05 unter Überbrückung einer gegebenenfalls zumindest zeitweilig vorhandenen Niveaudifferenz von einem Übernahmeniveau 40 der Übernahmeposition 04 zu einem Ablegeniveau 50 der Ablegeposition 05 führt.

Das Verfahren zeichnet sich dadurch aus, dass sich die Ablegeposition 05 auf einer Lage von Artikeln 02 befindet, noch bevor diese als nächste Stapellage 20 zuoberst auf einen am Stapelplatz 21 zu errichteten Stapel 22 aufgelegt wird.

So ist beispielsweise in Fig. 6 und Fig. 7 sowie Fig. 16 zu erkennen, wie eine zur verbrachte Zwischenlage 01 die Ablegeposition 05 oberhalb einer Lage von Artikeln 02 erreicht, welche Lage von Artikeln 02 momentan noch vom Bereitstellungsplatz in die Beladestation 09 übergeschoben wird. Fig. 8 und Fig. 9 zeigen, dass die verbrachte Zwischenlage 01 mit dem Erreichen der Ablegeposition 05 an ihrer Vorderkante 10 auf der in der Beladestation 09 befindlichen Lage von Artikeln 02 freigegeben wird, noch bevor die Beladestation 09 die in ihr befindlichen Lage von Artikeln 02 am Stapelplatz abgelegt hat. Erst in Fig. 10 hebt sich die Beladestation 09, wodurch die vom Bereitstellungsplatz zum Stapelplatz 21 transportierte Lage von Artikeln 02 und mit ihr die auf dieser aufgelegte Zwischenlage 01 am Stapelplatz 21 abgelegt ist.

Die Ablegeposition 05 befindet sich dabei auf einer Lage von Artikeln 02, welche fertiggestellt, aber noch nicht am Stapelpatz 21 abgelegt ist. Dabei wird mit dem Erreichen der Ablegeposition 05 eine zuvor in der Übernahmeposition 04 übernommene Zwischenlage 01 auf eine Lage von Artikeln 02 verbracht, noch bevor diese Lage von Artikeln 02 als nächste Stapellage 20 zuoberst auf einen am Stapelplatz 21 zu errichteten Stapel 22 aus mehreren, durch Lagen von Artikeln 02 gebildeten Stapellagen 20, von denen wenigstens zwei Stapellagen 20 durch eine Zwischenlage 01 getrennt sind, aufgelegt wird, und an ihrer Vorderkante 10 freigegeben. Durch Freigabe deren Vorderkante 10 wird die Zwischenlage auf die noch nicht am Stapelplatz 21 abgelegte Lage von Artikeln 02 abgelegt.

Die zum Auflegen am Stapelplatz 21 vorgesehenen Lagen von Artikeln 02 können hierbei auf einer von einem Bereitstellungsplatz umfassten Bereitstellungsfläche bereitgestellt werden. Der Ort des Stapelplatzes 21 ist vom Ort eines solchen, beispielsweise eine Bereitstellungsfläche umfassenden Bereitstellungsplatzes zumindest in horizontaler Richtung verschieden.

Das Verfahren kann ferner vorsehen, dass der Umgang mit den Artikeln 02 zumindest so lange wenigstens in horizontaler Richtung räumlich getrennt vom Umgang mit den Zwischenlagen 01 erfolgt, bis die Ablegeposition 05 bei der Verbringung erreicht ist und erst dann Zwischenlagen 01 und Artikel 02 zusammengeführt werden.

Die Lagen von Artikeln 02 werden hierbei bevorzugt an einem zumindest in horizontaler Richtung zum Stapelpatz 21 versetzten Bereitstellungsplatz bereitgestellt und unter Überbrückung eines sich durch den in horizontaler Richtung zum Stapelplatz 21 versetzten Bereitstellungsplatz ergebenden horizontalen Abstands sowie eines gegebenenfalls vorhandenen vertikalen Abstands zum Stapelpatz 21 transportiert und dort jeweils zuoberst auf einen bis dato am Stapelplatz 21 errichteten Stapel 22 aufgelegt.

Die räumliche Trennung in horizontaler Richtung kann sich dabei durch einen durch Pfeile 03 angedeuteten Verbringungsweg auszeichnen, entlang dessen Zurücklegung die Vorderkante 10 einer übernommenen Zwischenlage 01 von der Übernahmeposition 04 bis zur Ablegeposition 05 eine Wegstrecke in horizontaler Richtung zurücklegt, welche dem doppelten oder mehr einer Erstreckung der Zwischenlage 01 von deren Vorderkante 10 zu der dieser gegenüberliegenden und die nachgeschleppte Partie 11 abschließenden Hinterkante 12 entspricht.

Der durch Pfeile 03 angedeutete Verbringungsweg überbrückt eine beispielsweise zumindest zeitweilig beim Umgang mit Zwischenlagen 01 auftretende Niveaudifferenz zwischen einem Übernahmeniveau 40 der Übernahmeposition 04 und einem beispielsweise veränderlichen Ablegeniveau 50 der Ablegeposition 05. Durch ein beispielsweise veränderliches Ablegeniveau 50 kann beim Umgang mit Zwischenlagen 01 zumindest zeitweilig eine Niveaudifferenz auftreten, wenn sich das Übernahmeniveau 40 zwischen einem ersten Ablegeniveau 51 beispielsweise zu Beginn des Aufstapelns eines Stapels 22 (Fig. 1 bis Fig. 9) und einem zweiten Ablegeniveau 52 beispielsweise gegen Ende des Aufstapelns eines Stapels 22 (Fig. 12 bis Fig. 16) befindet. Ebenso kann eine Niveaudifferenz zumindest zeitweilig auftreten, wenn das Ablegeniveau 50 unveränderlich und das Übernahmeniveau 40 veränderlich ist. Eine Niveaudifferenz kann zumindest zeitweilig auch dann auftreten, wenn sowohl das Übernahmeniveau 40, als auch das Ablegeniveau 50 wie in den Fig. 1 a) bis 16 b) dargestellt veränderlich sind. Ständig kann eine Niveaudifferenz auftreten, wenn veränderliche oder unveränderliche Übernahmeniveaus 40 und Ablegeniveaus 50 während des gesamten Umgangs mit Zwischenlagen 01 verschieden sind.

Die Überbrückung einer gegebenenfalls zumindest zeitweilig vorhandenen Niveaudifferenz vom Übernahmeniveau 40 der Übernahmeposition 04 zum Ablegeniveau 50 der Ablegeposition 05 startet bevorzugt mit dem Greifen oder unmittelbar nach dem Greifen der Vorderkante 10 einer Zwischenlage 01.

Die Überbrückung einer gegebenenfalls zumindest zeitweilig vorhandenen Niveaudifferenz vom Übernahmeniveau 40 der Übernahmeposition 04 zum Ablegeniveau 50 der Ablegeposition 05 entlang des durch Pfeile 03 angedeuteten Verbringungswegs beginnt damit vorzugsweise unmittelbar an der Übernahmeposition 04 und kann beispielsweise erst an der Ablegeposition 05 enden. Dies ist dadurch möglich, dass die Zwischenlage 01 bei deren Übernahme und während der gesamten Verbringung nur an deren Vorderkante 10 gegriffen wird, wobei die sich an die Vorderkante 10 der übernommene Zwischenlage 01 anschließende Partie 11 nur nachgeschleppt wird. Dadurch geht nur von der gegriffenen Vorderkante 10 und einer diese greifenden Greifvorrichtung 06 eine Kollisionsgefahr aus und nicht von der gesamten Zwischenlage 01, wenn diese beispielsweise wie beim Stand der Technik vermittels über ihre gesamte Oberfläche verteilt angeordneten Saugglocken während deren Verbringung angesaugt werden würde.

Von der nachgeschleppten Partie 11 geht bei der Erfindung keine Kollisionsgefahr aus, da diese nirgendwo einhaken kann und darüber hinaus biegsam ist. Das Verfahren sieht demnach vor, die biegsame Eigenschaft von Zwischenlagen 01 zu nutzen, um den durch Pfeile 03 angedeuteten Verbringungsweg und damit die Dauer der Verbringung beim Umgang mit den Zwischenlagen 01 zu verkürzen, einhergehend mit einer höheren erzielbaren Taktung.

Das Verfahren sieht damit bevorzugt vor, unmittelbar nach der Übernahme einer Zwischenlage mit der Verbringung entlang des Verbringungswegs zu beginnen, ungeachtet des Umstands, ob eine sich an die gegriffene Vorderkante 10 anschließende Partie 11 einer zu verbringenden Zwischenlage 01 entlang des durch Pfeile 03 angedeuteten Verbringungswegs mit Teilen einer Anlage, wie etwa mit der Vorrichtung 100 in Berührung kommt, innerhalb oder vermittels welcher Anlage die Zwischenlage 01 von der Übernahmeposition 04 zur Ablegeposition 05 verbracht wird. Dabei kann die Verbringung sofort in der Richtung entlang des durch Pfeile 03 angedeuteten Verbringungswegs erfolgen, welche den kürzesten Weg von der Übernahmeposition 04 zur Ablegeposition 05 weist.

Zumindest die der Überbrückung einer gegebenenfalls zumindest zeitweilig vorhandenen Niveaudifferenz vom Übernahmeniveau zum Ablegeniveau dienenden, zur Zurücklegung des Verbringungswegs erforderlichen, durch Pfeile 31 angedeuteten Bewegungen können harmonisch sein. Bei einer der Überbrückung zumindest der gegebenenfalls zumindest zeitweilig vorhandenen Niveaudifferenz dienenden harmonischen Bewegung nimmt die Geschwindigkeit von Null beginnend stetig zu und nimmt wieder stetig auf Null ab. Beispiele für harmonische Bewegungen sind die Bewegungskomponenten einer Kreisbewegung in beispielsweise orthogonalen Richtungen innerhalb der von der Kreisbewegung aufgespannten Ebene. Auch Bewegungen, die einer Sinus- oder Cosinusfunktion folgen, sind Beispiele für harmonische Bewegungen.

Der durch Pfeile 03 angedeutete Verbringungsweg kann hierzu wenigstens zeitweilig während des Aufstapelns eines Stapels 22 zumindest abschnittsweise einen die gegebenenfalls zumindest zeitweilig vorhandenen Niveaudifferenz überbrückenden Verlauf proportional eines in Fig. 1 b), Fig. 2 b), Fig. 3 b), Fig. 4 b), Fig. 5 b), Fig. 8 b), Fig. 9 b), Fig. 12 b) und Fig. 16 b) schematisch dargestellten Abschnitts 30 einer Cosinusfunktion beginnend bei 0°und endend bei 180°, wenn die Verbringung in Fig. 1 bis Fig. 8 von der Übernahmeposition 04 weg nach rechts führen würde, oder beginnend bei 0°und endend bei -180°, wenn die Verbringung wie in Fig. 1 bis Fig. 9 dargestellt von der Übernahmeposition 04 weg nach links führt, oder beginnend bei 180° und endend bei 360°, wenn die Verbringung in Fig. 12 bis Fig. 16 von der Übernahmeposition 04 weg nach rechts führen würde, oder beginnend bei 180° und endend bei 0°, wenn die Verbringung wie in Fig. 12 bis Fig. 16 dargestellt von der Übernahmeposition 04 weg nach links führt, aufweisen.

Dabei kann der gesamte durch Pfeile 03 angedeutete Verbringungsweg wie in Fig. 9 b) einmalig beispielhaft dargestellt, wenigstens zeitweilig während des Aufstapelns eines Stapels 22 ausschließlich einer Proportionalität zu einem solchen Abschnitt 30 einer Cosinusfunktion entsprechen, wobei unmittelbar mit dem Greifen der Zwischenlage 01 an deren Vorderkante 10 der Abschnitt 30 der Cosinusfunktion und damit die Überbrückung der gegebenenfalls zumindest zeitweilig vorhandenen Niveaudifferenz startet und erst mit Erreichen der Ablegeposition 05 endet. Dadurch findet die Überbrückung der gegebenenfalls zumindest zeitweilig vorhandenen Niveaudifferenz über den gesamten durch Pfeile 03 angedeuteten Verbringungsweg von der Übernahmeposition 04 zur Ablegeposition 05 statt.

Denkbar ist jedoch auch, dass der durch Pfeile 03 angedeutete Verbringungsweg wie in Fig. 1 bis Fig. 8 und Fig. 12 sowie Fig. 16 dargestellt, wenigstens zeitweilig während des Aufstapelns eines Stapels 22 zusätzlich einen oder mehrere beispielsweise horizontale lineare Abschnitte 35 aufweist, wobei beispielsweise der Abschnitt 30 der Cosinusfunktion entlang welcher der durch Pfeile 03 angedeutete Verbringungswegs zumindest abschnittsweise führt, unmittelbar mit der Übernahme beginnt und dann in einen linearen, vorzugsweise horizontalen Abschnitt 35 übergeht, der dann bis zur Ablegeposition 05 führt. Dadurch findet die Überbrückung der gegebenenfalls zumindest zeitweilig vorhandenen Niveaudifferenz nur entlang eines durch den Abschnitt 30 der Cosinusfunktion gebildeten Teils des Verbringungswegs von der Übernahmeposition 04 zur Ablegeposition 05 statt.

Der durch Pfeile 03 angedeutete Verbringungsweg kann wenigstens zeitweilig während des Aufstapelns eines Stapels 22 ausschließlich durch einen diagonalen linearen Abschnitt 36 gebildet sein, wie dies in Fig. 7 einmalig beispielhaft dargestellt ist. Dabei führt der Verbringungsweg in direkter Richtung und damit mit einer geringstmöglichen Anzahl von Bewegungen zu dessen Zurücklegung auskommend, linear von der Übernahmeposition 04 zur Ablegeposition 05 unter Überbrückung einer gegebenenfalls zumindest zeitweilig vorhandenen Niveaudifferenz vom Übernahmeniveau 40 zum Ablegeniveau 40 und die Überbrückung der Niveaudifferenz über den gesamten Verbringungsweg von der Übernahmeposition zur Ablegeposition stattfindet. Eine zumindest der Überbrückung einer gegebenenfalls zumindest zeitweilig vorhandenen Niveaudifferenz vom Übernahmeniveau 40 zum Ablegeniveau 50 dienende, zur Zurücklegung des durch Pfeile 03 angedeuteten Verbringungswegs erforderliche, durch Pfeile 31 angedeutete Bewegung startet hierbei beispielsweise sprunghaft und bleibt bis zum Erreichen des Ablegeniveaus 50 konstant.

Wichtig ist hervorzuheben, dass die Verbringungswege aufeinander folgender Verbringungen unterschiedlich sind, beispielsweise zur Anpassung an sich durch veränderte Übernahme- und Ablegebedingungen. Solche veränderte Bedingungen können beispielsweise auftreten, wenn sich beim Umgang mit Zwischenlagen 01 und beim Umgang mit Artikeln 02 beispielsweise das Übernahmeniveau 40 und/oder das Ablegeniveau 50 stetig verändern.

So kann beispielsweise ein ausschließlich durch einen diagonalen linearen Abschnitt 36 gebildeter Verbringungsweg, der in gerader Richtung von der Übernahmeposition 04 zur Ablegeposition 05 führt vorteilhaft sein, wenn sich das Übernahmeniveau 40 oberhalb des Ablegeniveaus 50 befindet (Fig. 1 bis Fig. 9), wohingegen ein Verbringungsweg mit einem horizontalen linearen Abschnitt 35 und beispielsweise einem Abschnitt 30 einer Cosinusfunktion oder einem dem horizontalen linearen Abschnitt 35 vorangehenden, diagonalen linearen Abschnitt vorteilhaft ist, wenn sich das Ablegeniveau 50 oberhalb des Übernahmeniveaus 40 befindet (Fig. 12 bis Fig. 16).

Wie den voranstehenden Äußerungen zu entnehmen kann das Übernahmeniveau 40 gleichbleibend oder veränderlich sein. Alternativ oder zusätzlich kann das Ablegeniveau 50 gleichbleibend oder veränderlich sein. Anschaulich kann das Übernahmeniveau 40 unveränderlich sein, etwa wenn die Oberseite des Zwischenlagenstapels 13 mit abnehmender Anzahl von Zwischenlagen 01 im Zwischenlagenstapel 13 beispielsweise vermittels eines Hubwerks auf gleichbleibendem Niveau gehalten wird, oder wenn die Vereinzelung der Zwischenlagen 01 von der Unterseite des Zwischenlagenstapels 13 her geschieht. Das Übernahmeniveau 40 kann alternativ beispielsweise mit abnehmender Anzahl von Zwischenlagen 01 im Zwischenlagenstapel 13 veränderlich sein, ebenso wie das Ablegeniveau beispielsweise von der Höhe eines an einem Stapelplatz 21 bis dato aufgestapelten Stapels 22 abhängig sein kann.

Das Verfahren kann vorsehen, dass der Umgang mit Zwischenlagen 01 die Verbringung zuvor von einem Zwischenlagenstapel 13 separierter Zwischenlagen 01 umfasst. Die Separierung einer Zwischenlage 01 nach der anderen vom Zwischenlagenstapel 13 erfolgt hierbei beispielsweise wie in Fig. 1 bis Fig. 16 dargestellt durch eine gesonderte Vereinzelungsvorrichtung 08.

Alternativ kann der Umgang mit Zwischenlagen 01 eine Vereinzelung von Zwischenlagen 01 eines Zwischenlagenstapels 13 zum Zweck einer Separierung von Zwischenlagen 01 vom Zwischenlagenstapel 13 umfassen. Dabei umfasst die Übernahmeposition 04 zumindest einen gegebenenfalls veränderlichen Ort, den wenigstens eine die Vorderkante 10 umfassende Partie einer momentan zuoberst auf einem Zwischenlagenstapel 13 aufliegenden Zwischenlage 01 einnimmt.

Das Verfahren kann vorsehen, dass die Verbringung einer Zwischenlage 01 von der Übernahmeposition 04 zur Ablegeposition 05 erfolgt, während eine beispielsweise an einem Bereitstellungsplatz, beispielsweise auf einer vom Bereitstellungsplatz umfassten Bereitstellungsfläche fertiggestellte und bereitgestellte Lage von Artikeln 02 zu einem Stapelplatz 21 verbracht wird, um dort als nächste Stapellage 20 eines am Stapelplatz 21 aufzustapelnden Stapels 22 abgelegt zu werden.

Alternativ oder zusätzlich kann das Verfahren vorsehen, dass die Verbringung einer Zwischenlage 01 von der Übernahmeposition 04 zur Ablegeposition 05 erfolgt, während beispielsweise an einem Bereitstellungsplatz eine als eine Stapellage 20 in einen am Stapelplatz 21 zu errichtenden Stapel 22 einzubringende Lage von Artikeln 02 bereit- oder beispielsweise durch Gruppieren von Artikeln 02 entsprechend einer zu erzielenden Anordnung von Artikeln 02 in der entsprechenden Lage von Artikeln 02 fertiggestellt wird.

Bevorzugt kann das Verfahren eine Stützung einer momentan entlang des Verbringungswegs in Verbringung befindlichen Zwischenlage 01 zumindest abschnittsweise entlang des Verbringungswegs vorsehen. Dies kann wie bereits erwähnt durch eine oder mehrere Abstützelemente 71 erfolgen.

Eine momentan entlang des Verbringungswegs von der Übernahmeposition 04 zur Ablegeposition 05 verbrachte Zwischenlage 01 kann hierbei zumindest abschnittsweise von beispielsweise durch Abstützelemente 71 gebildeten Teilen einer beispielsweise durch die Vorrichtung 100 gebildeten Anlage zum Umgang mit Zwischenlagen 01 während des Umgangs mit Artikeln 02 gestützt werden, innerhalb oder vermittels welcher Anlage die Zwischenlage von der Übernahmeposition zur Ablegeposition verbracht wird.

Wichtig ist hervorzuheben, dass es sich bei den die Zwischenlage 01 zumindest abschnittsweise während ihrer Verbringung von der Übernahmeposition 04 zur Ablegeposition 05 stützenden Teilen der Anlage während der Verbringung um unterschiedliche Teile handeln kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 01: Zwischenlage
- 02: Artikel
- 03: den Verbringungsweg andeutender Pfeil
- 04: Übernahmeposition
- 05: Ablegeposition
- 06: Greifvorrichtung
- 07: Abstützelementeposition
- 08: Vereinzelungsvorrichtung
- 09: Beladestation
- 10: Vorderkante der Zwischenlage 01
- 11: nachgeschleppte Partie der Zwischenlage 01
- 12: Hinterkante der Zwischenlage 01
- 13: Zwischenlagenstapel
- 20: Stapellage
- 21: Stapelplatz
- 22: Stapel
- 30: Abschnitt einer Cosinusfunktion
- 31: Pfeil (vertikale Bewegung entlang des Verbringungswegs)
- 32: Pfeil (horizontale Bewegung entlang des Verbringungswegs)
- 33: Pfeil (vertikale Bewegung während der Rückbewegung)
- 34: Pfeil (horizontale Bewegung während der Rückbewegung)
- 35: linearer Abschnitt
- 36: linearer Abschnitt
- 40: Übernahmeniveau
- 50: Ablegeniveau
- 51: erstes Ablegeniveau
- 52: zweites Ablegeniveau
- 60: Greiferniveau
- 70: Abstützelementeniveau
- 71: Abstützelement
- 100: Vorrichtung

## Patentansprüche

1. Verfahren zum Umgang mit Zwischenlagen (01) während eines Umgangs mit Artikeln (02), welcher Umgang mit Artikeln (02) ein Aufstapeln eines Stapels (22) mit wenigstens zwei durch eine Zwischenlage (01) getrennten und durch jeweils eine Lage von Artikeln (02) gebildeten Stapellagen (20) an einem Stapelplatz (21) umfasst, wobei:
- der Umgang mit Zwischenlagen (01) eine Verbringung einer Zwischenlage (01) nach der anderen entlang eines Verbringungswegs (03) von einer Übernahmeposition (04) zu einer Ablegeposition (05) umfasst,
- eine Zwischenlage (01) durch Greifen deren Vorderkante (10) an der Übernahmeposition (04) übernommen wird,
- die Zwischenlage (01) während der Verbringung ausschließlich an deren Vorderkante (10) gehalten wird, wodurch eine sich an die Vorderkante (10) anschließende Partie (11) der Zwischenlage (01) entsprechend der Bewegung, welche die Vorderkante (10) während der Verbringung entlang des Verbringungswegs (03) erfährt, nachgeschleppt wird,
- der Verbringungsweg (03) von der Übernahmeposition (04) zur Ablegeposition (05) unter Überbrückung einer gegebenenfalls zumindest zeitweilig vorhandenen Niveaudifferenz von einem Übernahmeniveau (40) der Übernahmeposition (04) zu einem Ablegeniveau (50) der Ablegeposition (05) führt, und
- die Verbringungswege (03) aufeinander folgender Verbringungen unterschiedlich sind, **dadurch gekennzeichnet, dass**
- sich die Ablegeposition (05) auf einer Lage von Artikeln (02) befindet, noch bevor diese als nächste Stapellage (20) zuoberst auf einen am Stapelplatz (21) zu errichtenden Stapel (22) aufgelegt wird.

2. Verfahren nach Anspruch 1, wobei die Überbrückung einer gegebenenfalls zumindest zeitweilig vorhandenen Niveaudifferenz vom Übernahmeniveau (40) zum Ablegeniveau (50) mit dem Greifen oder unmittelbar nach dem Greifen der Vorderkante (10) einer Zwischenlage (01) startet und/oder mit der Freigabe der Vorderkante (10) einer Zwischenlage (01) endet.

3. Verfahren nach Anspruch 1 oder 2, wobei zumindest die der Überbrückung einer gegebenenfalls zumindest zeitweilig vorhandenen Niveaudifferenz vom Übernahmeniveau (40) zum Ablegeniveau (50) dienenden, zur Zurücklegung des Verbringungswegs (03) erforderlichen Bewegungen (31) harmonisch sind.

4. Verfahren nach Anspruch 3, wobei der Verbringungsweg (03) zumindest abschnittsweise einen die gegebenenfalls zumindest zeitweilig vorhandenen Niveaudifferenz überbrückenden Verlauf proportional eines Abschnitts (30) einer Cosinusfunktion:
- beginnend bei 0°und endend bei 180° oder -180°, oder
- beginnend bei 180° und endend bei 360° oder 0°
aufweist.

5. Verfahren nach Anspruch 1 oder 2, wobei der Verbringungsweg (03, 36) zumindest zeitweilig während des Aufstapelns eines Stapels (22) in direkter Richtung linear von der Übernahmeposition (04) zur Ablegeposition (05) unter Überbrückung einer gegebenenfalls zumindest zeitweilig vorhandenen Niveaudifferenz vom Übernahmeniveau (40) zum Ablegeniveau (50) führt und die Überbrückung der Niveaudifferenz über den gesamten Verbringungsweg (03, 36) von der Übernahmeposition (04) zur Ablegeposition (05) stattfindet.

6. Verfahren nach einem der voranstehenden Ansprüche, wobei das Übernahmeniveau (40) gleichbleibend oder veränderlich ist, und/oder das Ablegeniveau (50) gleichbleibend oder veränderlich ist.

7. Verfahren nach einem der voranstehenden Ansprüche, wobei der Umgang mit Zwischenlagen (01) die Verbringung zuvor von einem Zwischenlagenstapel (13) separierter Zwischenlagen (01) umfasst.

8. Verfahren nach einem der voranstehenden Ansprüche, wobei der Umgang mit Zwischenlagen (01) eine Vereinzelung von Zwischenlagen (01) eines Zwischenlagenstapels (13) zum Zweck einer Separierung von Zwischenlagen (01) von dem Zwischenlagenstapel (13) umfasst und die Übernahmeposition (04) zumindest einen Ort umfasst, den wenigstens eine die Vorderkante (10) umfassende Partie einer momentan zuoberst auf einem Zwischenlagenstapel (13) aufliegenden Zwischenlage (01) einnimmt.

9. Verfahren nach einem der voranstehenden Ansprüche, wobei der Umgang mit Artikeln (02) zumindest so lange wenigstens in horizontaler Richtung räumlich getrennt vom Umgang mit den Zwischenlagen (01) erfolgt, bis die Ablegeposition (05) erreicht ist und erst dann Zwischenlagen (01) und Artikel (02) zusammengeführt werden.

10. Verfahren nach Anspruch 9, wobei sich die räumliche Trennung in horizontaler Richtung durch einen Verbringungsweg (03) auszeichnet, entlang dessen Zurücklegung die Vorderkante (10) einer übernommenen Zwischenlage (01) von der Übernahmeposition (04) bis zur Ablegeposition (05) eine Wegstrecke in horizontaler Richtung zurücklegt, welche dem doppelten oder mehr einer Erstreckung der Zwischenlage (01) von deren Vorderkante (10) zu der dieser gegenüberliegenden und die nachgeschleppte Partie (11) abschließenden Hinterkante (12) entspricht.

11. Verfahren nach einem der voranstehenden Ansprüche, wobei das Verfahren eine Einbringung von Zwischenlagen (01) als Boden- und/oder Decklagen in den Stapel (22) vorsieht, wobei die Ablegeposition (05) zu Beginn und/oder zum Ende des Errichtens eines Stapels (22) direkt an der erforderlichen Stelle am Stapelplatz (21) liegt, die erreicht werden muss, um am Stapelplatz (21) eine Zwischenlage (01) als Boden- und/oder Decklage abzulegen.

12. Verfahren nach einem der voranstehenden Ansprüche, wobei die Zwischenlage (01) während deren Verbringung von der Übernahmeposition (04) zur Ablegeposition (05) zumindest abschnittsweise von Teilen (71) einer Anlage (100) zum Umgang mit Zwischenlagen (01) während des Umgangs mit Artikeln (02) gestützt wird, innerhalb oder vermittels welcher Anlage (100) die Zwischenlage (01) von der Übernahmeposition (04) zur Ablegeposition (05) verbracht wird.

13. Vorrichtung (100) zur Durchführung eines Verfahrens nach einem der voranstehenden Ansprüche, umfassend:
- eine entlang eines Verbringungswegs (03, 30, 35, 36) von einer Übernahmeposition (04) zu einer Ablegeposition (05) beweglich angeordnete Greifvorrichtung (06), welche eine Zwischenlage (01) auf einem Übernahmeniveau (40) in der Übernahmeposition (04) an deren Vorderkante (10) greift, die Verbringung entlang des Verbringungswegs (03, 30, 35, 36) besorgt und dabei eine sich an die Vorderkante (10) anschließende Partie (11) der Zwischenlage (01) entlang des Verbringungswegs (03, 30, 35, 36) nachschleppt, und die zuvor an deren Vorderkante (10) gegriffene Zwischenlage (01) auf einem Ablegeniveau (50) in der Ablegeposition (05) wieder frei gibt, wobei die Verbringungswege aufeinander folgender Verbringungen unterschiedlich sind, **gekennzeichnet durch**
- einen zumindest in horizontaler Richtung zum Stapelpatz (21) versetzten Bereitstellungsplatz, an dem Lagen von Artikeln (02) bereitgestellt werden,
- eine Beladestation (09), vermittels der eine am Bereitstellungsplatz bereitgestellte Lage von Artikeln (02) nach der anderen unter Überbrückung eines sich **durch** den in horizontaler Richtung zum Stapelplatz (21) versetzten Bereitstellungsplatz ergebenden horizontalen Abstands sowie eines gegebenenfalls vertikalen Abstands zum Stapelpatz (21) transportiert und dort jeweils zuoberst auf einen bis dato am Stapelplatz (21) errichteten Stapel (22) aufgelegt wird,
wobei die Greifvorrichtung (07) **durch** Freigabe der zuvor an deren Vorderkante (10) gegriffene Zwischenlage (01) in der Ablegeposition (05) die verbrachte Zwischenlage (01) auf einer als nächstes, als oberste Stapellage (20) eines bis dato am Stapelplatz (21) errichteten Stapels (22) abzulegende Lage von Artikeln (02) auflegt, noch bevor diese Lage von Artikeln (02) am Stapelplatz (21) abgelegt ist.

14. Vorrichtung nach Anspruch 13, wobei ein oder mehrere zwischen der Übernahmeposition (04) und der Ablegeposition (05) angeordnete Abstützelemente (71) vorgesehen sind, über welche die sich an die Vorderkante (10) anschließende, nachgeschleppte Partie (11) der Zwischenlage (01) von der Greifvorrichtung (06) während der Verbringung gezogen wird.

15. Vorrichtung nach Anspruch 14, wobei die Abstützelemente (71) vertikal beweglich angeordnet sind, wobei sich ein Abstützelementeniveau (70), welches ein Abstützelement (71) an seiner Abstützelementposition (07) zwischen der Übernahmeposition (04) und der Ablegeposition (05) einnimmt, unterhalb des jeweiligen Greiferniveaus (60) befindet, welches die Greifvorrichtung (06) bei der Passage des jeweiligen Abstützelements (71) entlang des Verbringungswegs (03, 30, 35, 36) einnimmt.

## Claims

1. A method for handling intermediate layers (01) during a handling of articles (02), which handling of articles (02) comprises a stacking of a stack (22) at a stacking station (21) with at least two stack layers (20) being separated by an intermediate layer (01) and each stack layer (20) being formed by a layer of articles (02), wherein:
- the handling of the intermediate layers (01) comprises a transfer of one intermediate layer (01) after the other along a transfer path (03) from a pick-up position (04) to a set-down position (05);
- an intermediate layer (01) is picked up at the pick-up position (04) by its leading edge (10) being gripped;
- the intermediate layer (01) is held exclusively at its leading edge (10) during the transfer, whereby a section (11) of the intermediate layer (01) abutting on the leading edge (10) is trailed along according to the motion that the leading edge (10) undergoes during the transfer along the transfer path (03);
- the transfer path (03) from the pick-up position (04) to the set-down position (05) leads by way of bridging an, as the case may be, at least temporarily existing level difference from a pick-up level (40) of the pick-up position (04) to a set-down level (50) of the set-down position (05);
and
- the transfer paths (03) of consecutive transfers are different from each other, **characterised in that**
- the set-down position (05) is located on a layer of articles (02) even before the said layer of articles (02) is set down as a next stack layer (20) on top of a stack (22) to be built up at a stacking station (21).

2. The method as recited in claim 1 wherein the bridging of an, as the case may be, at least temporarily existing level difference from a pick-up level (40) to a set-down level (50) starts together with or immediately after the gripping of the leading edge (10) of an intermediate layer (01) and/or ends with the release of the leading edge (10) of an intermediate layer (01).

3. The method as recited in claim 1 or 2 wherein at least those motions (31) are harmonic which serve for the bridging of an, as the case may be, at least temporarily existing level difference from a pick-up level (40) to a set-down level (50), and which are required for covering the distance of the transfer path (03).

4. The method as recited in claim 3 wherein the transfer path (03) at least section-wise has a course bridging the, as the case may be, at least temporarily existing level difference, which course is proportional to a section (30) of a cosine function:
- starting with 0° and ending in 180° or -180°, or
- starting with 180° and ending in 360° or 0°.

5. The method as recited in claim 1 or 2 wherein the transfer path (03, 36) leads, at least temporarily during the stacking of a stack (22), in a direct direction linearly from the pick-up position (04) to the set-down position (05) by way of bridging an, as the case may be, at least temporarily existing level difference from a pick-up level (40) to a set-down level (50) and the bridging of the level difference takes place over the entire transfer path (03, 36) from the pick-up position (04) to the set-down position (05).

6. The method as recited in one of the previous claims wherein the pick-up level (40) is invariable or variable and/or the set-down level (50) is invariable or variable.

7. The method as recited in one of the previous claims wherein the handling of intermediate layers (01) comprises the transfer of intermediate layers (01) previously separated from an intermediate layer stack (13).

8. The method as recited in one of the previous claims wherein the handling of intermediate layers (01) comprises a separation of intermediate layers (01) of an intermediate layer stack (13) for the purpose of separating intermediate layers (01) from the intermediate layer stack (13), and the pick-up position (04) comprises at least one location, which is taken by at least one section of an intermediate layer (01) momentarily resting on the top of an intermediate layer stack (13), which section comprises the leading edge (10).

9. The method as recited in one of the previous claims wherein the handling of articles (02) is carried out spatially separated at least in a horizontal direction from the handling of intermediate layers (01) for at least so long until the set-down position (05) is reached, and only then are the intermediate layers (01) and the articles (02) brought together.

10. The method as recited in claim 9 wherein the spatial separation in a horizontal direction is **characterised by** a transfer path (03), traveling along which the leading edge (10) of a picked-up intermediate layer (01) covers a distance in a horizontal direction from the pick-up position (04) to the set-down position (05), which distance corresponds to the double or more of an extension of the intermediate layer (01) from its leading edge (10) to the rear edge (12) opposite it and concluding the section (11) being trailed along.

11. The method as recited in one of the previous claims wherein the method provides an introduction of intermediate layers (01) into the stack (22) as base layers and/or top layers, wherein the set-down position (05) in the beginning and/or the end of the building of a stack (22) is located directly in the required place at the stacking station (21), which place has to be reached in order to set down an intermediate layer (01) as base layer and/or top layer at the stacking station (21).

12. The method as recited in one of the previous claims wherein the intermediate layer (01) is supported during its transfer from the pick-up position (04) to the set-down position (05) at least section-wise by parts (71) of a facility (100) for handling intermediate layers (01) during the handling of articles (02), within which or by means of which facility (100) the intermediate layer (01) is transferred from the pick-up position (04) to the set-down position (05).

13. A device (100) for performing a method as recited in one of the previous claims comprising:
- a gripping device (06), which is arranged to be movable along a transfer path (03, 30, 35, 36) from a pick-up position (04) to a set-down position (05), which gripping device (06) grips an intermediate layer at a pick-up level (40) in the pick-up position (04) at its leading edge (10), provides the transfer along the transfer path (03, 30, 35, 36) and thereby trails a section (11) of the intermediate layer (01) abutting on the leading edge (10) along the transfer path (03, 30, 35, 36), and releases the intermediate layer (01) again, which was previously gripped at its leading edge (10), at a set-down level (50) in the set-down position (05), wherein the transfer paths of consecutive transfers are different from each other, **characterised by**
- a staging station offset in relation to the stacking station (21) in at least a horizontal direction, at which staging station layers of articles (02) are staged;
- a loading station (09) by means of which layers of articles (02) staged at the staging station are transported one after the other to the stacking station (21) and there respectively set down on the top of a stack (22) so far having been built up at the stacking station (21), by way of bridging a horizontal distance resulting from the staging station being offset in a horizontal direction in relation to the stacking station (21) as well as a vertical distance, as the case may be;
wherein the gripping device (07) sets down the transferred intermediate layer (01) by release of the intermediate layer (01), which was previously gripped at its leading edge (10) in the set-down position (05), onto a layer of articles (02) to be set down next as the top stack layer (20) of a stack (22) so far having been built up at the stacking station (21), even before this layer of articles (02) has been set down at the stacking station (21).

14. The device as recited in claim 13 wherein one or more support elements (71) arranged between the pick-up position (04) and the set-down position (05) are provided, over which support elements (71) the section (11) of the intermediate layer (01) abutting on the leading edge (10) and being trailed along is pulled by the gripping device (06) during the transfer.

15. The device as recited in claim 14 wherein the support elements (71) are arranged vertically movable, wherein a support element level (70), which a support element (71) takes at its support element position (07) between the pick-up position (04) and the set-down position (05), is located below the respective gripper level (60), which the gripping device (06) takes in passing the respective support element (71) along the transfer path (03, 30, 35, 36).

## Revendications

1. Procédé de manutention de couches intermédiaires (01) pendant une manutention d'articles (02), laquelle manutention d'articles (02) comprend une formation d'une pile (22) dotée d'au moins deux couches de pile (20) séparées par une couche intermédiaire (01) et formées respectivement par une couche d'articles (02), à un lieu d'empilement (21) :
- la manutention de couches intermédiaires (01) comprenant un transfert de couches intermédiaires (01) l'une après l'autre, le long d'une voie de transfert (03), d'une position de reprise (04) à une position de dépose (05),
- une couche intermédiaire (01) étant reprise à la position de reprise (04) par préhension de son bord avant (10),
- la couche intermédiaire (01) étant maintenue pendant le transfert exclusivement au niveau de son bord avant (10), de telle sorte qu'une partie (11) de la couche intermédiaire (01) arrivant après le bord avant (10) est tirée à la suite pour suivre le mouvement auquel est soumis le bord avant (10) au cours du transfert le long de la voie de transfert (03),
- la voie de transfert (03) conduisant de la position de reprise (04) à la position de dépose (05) par franchissement d'une différence de niveau existant éventuellement du moins temporairement entre un niveau de reprise (40) de la position de reprise (04) à un niveau de dépose (50) de la position de dépose (05),
et
- les voies de transfert (03) de transferts se suivant l'un après l'autre étant différentes les unes des autres, **caractérisé en ce que**
- la position de dépose (05) se trouve sur une couche d'articles (02) avant que celle-ci ne soit posée en tant que prochaine couche de la pile (20) sur le haut d'une pile (22) à former sur le lieu d'empilement (21).

2. Procédé selon la revendication 1, le franchissement d'une différence de niveau existant éventuellement du moins temporairement entre le niveau de reprise (40) et le niveau de dépose (50) débutant avec la préhension ou immédiatement après la préhension du bord avant (10) d'une couche intermédiaire (01) et/ou se termine avec la relâche du bord avant (10) d'une couche intermédiaire (01).

3. Procédé selon la revendication 1 ou 2, au moins les mouvements (31) servant à franchir une différence de niveau existant éventuellement au moins temporairement entre le niveau de reprise (40) et le niveau de dépose (50) et nécessaires pour parcourir la voie de transfert (03) étant harmonieux.

4. Procédé selon la revendication 3, la voie de transfert (03) présentant au moins sur certains passages un parcours franchissant la différence de niveau existant éventuellement au moins temporairement, proportionnellement à un tronçon (30) d'une fonction cosinus :
- allant de 0° à 180° ou -180°, ou
- allant de 180° à 360° ou 0°.

5. Procédé selon la revendication 1 ou 2, la voie de transfert (03, 36) conduisant au moins temporairement pendant l'empilement d'une pile (22) directement et de manière linéaire de la position de reprise (04) à la position de dépose (05) par franchissement d'une différence de niveau, existant éventuellement au moins temporairement, entre le niveau de reprise (40) et le niveau de dépose (50), et le franchissement de la différence de niveau se faisant sur toute la longueur de la voie de transfert (03, 36), de la position de reprise (04) à la position de dépose (05).

6. Procédé selon l'une quelconque des revendications précédentes, le niveau de reprise (40) étant constant ou variable, et/ou le niveau de dépose (50) étant constant ou variable.

7. Procédé selon l'une quelconque des revendications précédentes, la manutention de couches intermédiaires (01) comprenant le transfert au préalable d'une pile de couches intermédiaires (13) de couches intermédiaires séparées (01).

8. Procédé selon l'une quelconque des revendications précédentes, la manutention de couches intermédiaires (01) comprenant une individualisation de couches intermédiaires (01) d'une pile de couches intermédiaires (13) dans le but de séparer des couches intermédiaires (01) de la pile de couches intermédiaires (13), et la position de reprise (04) comprenant au moins un emplacement que prend au moins une partie, comprenant le bord avant (10), d'une couche intermédiaire (01) se trouvant momentanément en haut d'une pile de couches intermédiaires (13).

9. Procédé selon l'une quelconque des revendications précédentes, la manutention d'articles (02) s'effectuant séparément dans l'espace, au moins horizontalement, de la manutention de couches intermédiaires (01), du moins jusqu'à ce que la position de dépose (05) soit atteinte, les couches intermédiaires (01) et les articles (02) n'étant rassemblés qu'à ce stade.

10. Procédé selon la revendication 9, la séparation dans l'espace et horizontale se distinguant par une voie de transfert (03) le long de laquelle le bord avant (10) d'une couche intermédiaire reprise (01) parcourt horizontalement un chemin de la position de reprise (04) à la position de dépose (05), lequel chemin correspond au double ou plus d'une longueur de la couche intermédiaire (01) mesurée de son bord avant (10) au bord arrière (12) qui lui est opposé et terminant la partie tirée à la suite (11).

11. Procédé selon l'une quelconque des revendications précédentes, le procédé prévoyant la mise en place de couches intermédiaires (01) en tant que couches de fond et/ou de couverture dans la pile (22), la position de dépose (05) se trouvant au début et/ou à la fin de la formation d'une pile (22) directement à l'endroit requis sur le lieu d'empilement (21), endroit qui doit être atteint pour que soit déposée une couche intermédiaire (01) en tant que couche de fond et/ou de couverture sur le lieu d'empilement (21).

12. Procédé selon l'une quelconque des revendications précédentes, la couche intermédiaire (01) étant soutenue pendant son transfert de la position de reprise (04) à la position de dépose (05), au moins sur certains passages, par des pièces (71) d'une installation (100) de manutention de couches intermédiaires (01) pendant la manutention d'articles (02), la couche intermédiaire (01) étant transférée au sein ou au moyen de ladite installation (100), de la position de reprise (04) à la position de dépose (05).

13. Dispositif (100) d'exécution d'un procédé selon l'une quelconque des revendications précédentes, comprenant :
- un dispositif de préhension (06) agencé mobile le long d'une voie de transfert (03, 30, 35, 36) d'une position de reprise (04) à une position de dépose (05), lequel dispositif (06) saisit une couche intermédiaire (01) au niveau de son bord avant (10) sur un niveau de reprise (40) dans la position de reprise (04), prend en charge le transfert le long de la voie de transfert (03, 30, 35, 36) et tire le long de la voie de transfert (03, 30, 35, 36) une partie (11) de la couche intermédiaire (01) arrivant après le bord avant (10), et relâche sur un niveau de dépose (50) dans la position de dépose (05) la couche intermédiaire (01) saisie auparavant au niveau de son bord avant (10), les voies de transfert de transferts se suivant les uns les autres étant différentes les unes des autres, **caractérisé par**
- un emplacement de préparation acheminé au moins horizontalement vers le lieu d'empilement (21) et auquel sont préparées des couches d'articles (02),
- une station de chargement (09), au moyen de laquelle des couches d'articles (02) préparées à l'emplacement de préparation sont transportées l'une après l'autre, par franchissement d'une distance horizontale résultant du déplacement dans le sens horizontal de l'emplacement de préparation vers le lieu d'empilement (21) ainsi que d'une distance éventuellement verticale jusqu'au lieu d'empilement (21), puis y sont chacune déposées sur le haut d'une pile (22) formée jusque là sur le lieu d'empilement (21),
le dispositif de préhension (07) déposant dans la position de dépose (05), par relâche de la couche intermédiaire (01) saisie auparavant par son bord avant (10), la couche intermédiaire transférée (01) sur une couche d'articles (02) à déposer en prochain en tant que couche de pile supérieure (20) d'une pile (22) formée jusque là sur le lieu d'empilement (21), avant que ladite couche d'articles (02) ne soit déposée sur le lieu d'empilement (21).

14. Dispositif selon la revendication 13, un ou plusieurs éléments de soutien (71) étant prévus agencés entre la position de reprise (04) et la position de dépose (05), sur lesquels la partie tirée (11) de la couche intermédiaire (01), arrivant après le bord avant (10), est tirée par le dispositif de préhension (06) pendant le transfert.

15. Dispositif selon la revendication 14, les éléments de soutien (71) étant agencés mobiles à la verticale, un niveau d'élément de soutien (70), que prend un élément de soutien (71) à sa position d'élément de soutien (07) entre la position de reprise (04) et la position de dépose (05), se trouvant au-dessous du niveau de la pince de saisie respective (60), niveau que prend le dispositif de préhension (06) lors du passage de chacun des éléments de soutien (71) le long de la voie de transfert (03, 30, 35, 36).
